# EUROPEAN PATENT APPLICATION

(11) **EP 4 757 054 A1**
(43) Date of publication of application: **10.06.2026**
(21) Application number: 23953647.7
(22) Date of filing: 28.09.2023
(51) Int. Cl.: H01M 50/567, H01M 50/557, H01M 50/172, H01M 10/058, H01M 10/0525, H01M 10/04, H01M 50/204, H01M 50/249

(54) **BATTERY CELL, BATTERY AND ELECTRIC DEVICE**

(71) Applicant: Contemporary Amperex Technology Co., Limited, Ningde, Fujian 352100 (CN)
(72) Inventor: SU, Huasheng, Ningde, Fujian 352100 (CN); XUE, Junpeng, Ningde, Fujian 352100 (CN); ZHENG, Yulian, Ningde, Fujian 352100 (CN); CAI, Runchen, Ningde, Fujian 352100 (CN); YANG, Rui, Ningde, Fujian 352100 (CN); WANG, Peng, Ningde, Fujian 352100 (CN); JIN, Haizu, Ningde, Fujian 352100 (CN)
(74) Representative: Kraus & Lederer PartGmbB
(86) International application number: PCT/CN2023/122549
(87) International publication number: WO 2025/065498

(57) **Abstract**

A battery cell, a battery, and an electric device. The battery cell comprises a housing, an electrode assembly, and electrode terminal. The housing is provided with a wall portion. The electrode assembly is accommodated within the housing. The electrode terminal is riveted on the wall portion, and the electrode terminal is electrically connected to the electrode assembly. The electrode terminal comprises a flanged portion; in the thickness direction of the wall portion, the flanged portion is formed at the end of the electrode terminal close to the electrode assembly and located on the side of the wall portion facing the electrode assembly; the end of the electrode terminal facing away from the electrode assembly forms a continuous connection surface, the connection surface being used for connecting to a bus component. The present battery cell is a structure that allows the electrode terminal to be riveted onto the wall portion from inside the housing, causing the bus component to be able to directly connect to the continuous connection surface at the end of the electrode terminal away from the electrode assembly, thus facilitating an increase in the connection area between the bus component and the electrode terminal, and thereby being able to improve the connection stability and reliability between the electrode terminal and the bus component.

## Description

### TECHNICAL FIELD

The present application relates to the field of battery technologies, and in particular, to a battery cell, a battery, and a power consuming apparatus.

### BACKGROUND

In recent years, new energy automobiles have been rapidly developed. In the field of electric automobiles, a power battery, as a power source of an electric automobile, plays an irreplaceable and important role. With the vigorous promotion of new energy automobiles, demands for power battery products also increase. As a core component of a new energy automobile, a battery has high requirements in terms of both use safety and service life. An electrode assembly of a battery cell usually needs to be connected to an electrode terminal disposed on a housing by using a current collection member, and then is connected to a busbar component in a battery by using the electrode terminal, to implement input or output of electric energy of the battery cell. However, connection stability between an electrode terminal of a battery cell and a busbar component in an existing battery is poor. As a result, the connection failure easily occurs between the battery cell and the busbar component. Consequently, the use stability of the battery is poor and the service life is short.

### SUMMARY

Embodiments of the present application provide a battery cell, a battery, and a power consuming apparatus, to effectively improve use stability of the battery.

According to a first aspect, an embodiment of the present application provides a battery cell, including a housing, an electrode assembly, and an electrode terminal, where the housing is provided with a wall portion; the electrode assembly is accommodated in the housing; the electrode terminal is riveted on the wall portion, where the electrode terminal is electrically connected to the electrode assembly; and the electrode terminal includes a flanged portion; in a thickness direction of the wall portion, the flanged portion is formed at an end of the electrode terminal close to the electrode assembly and located on a side of the wall portion facing the electrode assembly, to rivet the electrode terminal onto the wall portion; a continuous connection surface is formed at an end of the electrode terminal facing away from the electrode assembly, and the connection surface is used for connecting to a busbar component.

In the foregoing technical solution, the flanged portion of the electrode terminal is formed at an end of the electrode terminal close to the electrode assembly and located on a side of the wall portion facing the electrode assembly, and a connection surface used for connecting to a busbar component is formed at an end of the electrode terminal facing away from the electrode assembly, so that the electrode terminal is a structure riveted onto the wall portion from inside the housing, and an end of the electrode terminal riveted onto the wall portion at which the flanged portion is formed is used for electrically connecting to the electrode assembly. Therefore, there is no need to perform riveting on an end of the electrode terminal that is configured to connect to the busbar component and form a groove structure, and there is no need to connect a cover plate configured to block the groove structure to the electrode terminal, so that the busbar component can be directly connected to a continuous connection surface at an end of the electrode terminal that faces away from the electrode assembly, to reduce interference impact of a welding mark formed through welding between the cover plate and the electrode terminal on the busbar component, and help increase a connection area between the busbar component and the electrode terminal. Therefore, connection stability and connection reliability between the electrode terminal and the busbar component can be effectively improved, to reduce a risk that a connection failure occurs between the electrode terminal of the battery cell and the busbar component during use, thereby helping improve use stability and service life of a battery having such a battery cell.

In some embodiments, the connection surface is a plane.

In the foregoing technical solution, the connection surface of the electrode terminal for connecting to the busbar component is set as a planar structure, so that mutual connection between the electrode terminal and the busbar component is facilitated, and connection quality between the electrode terminal and the busbar component is improved.

In some embodiments, in the thickness direction of the wall portion, the wall portion is provided with a first surface facing away from the electrode assembly, and the connection surface is farther from the electrode assembly than the first surface.

In the foregoing technical solution, the connection surface of the electrode terminal that is used to connect to the busbar component is set to be farther away from the electrode assembly than the first surface of the wall portion that faces away from the electrode assembly, so that the electrode terminal is a structure that projects out of the first surface in the thickness direction of the wall portion. Therefore, in an aspect, it is convenient for the busbar component to be connected to the connection surface of the electrode terminal, which helps reduce assembly difficulty of mutual connection between the busbar component and the electrode terminal; in another aspect, the size of the region corresponding to the connection surface of the electrode terminal can be made to be thick, to improve the structural strength of the electrode terminal, thereby helping improve the connection strength and connection stability between the electrode terminal and the busbar component.

In some embodiments, in the thickness direction of the wall portion, a riveting groove is formed at an end of the electrode terminal that faces the electrode assembly, the flanged portion is disposed around the riveting groove, and a projection of the riveting groove is located in the connection surface.

In the foregoing technical solution, the riveting groove is formed on an end of the electrode terminal that faces the electrode assembly in the thickness direction of the wall portion, and the flanged portion is a structure surrounding an outer side of the riveting groove, so that it is convenient to perform riveting from the end of the electrode terminal that faces the electrode assembly, to implement flanged riveting of the flanged portion onto the wall portion.

In some embodiments, in the thickness direction of the wall portion, the wall portion is provided with a first surface facing away from the electrode assembly, and a groove bottom surface of the riveting groove is closer to the electrode assembly than the first surface.

In the foregoing technical solution, the groove bottom surface of the riveting groove is set to be closer to the electrode assembly than the first surface of the wall portion facing away from the electrode assembly, so that the thickness of a region between the groove bottom surface of the riveting groove and the connection surface can be increased, which helps improve structural strength of the electrode terminal, thereby improving connection strength and connection stability between the electrode terminal and the busbar component.

In some embodiments, in the thickness direction of the wall portion, the wall portion is provided with a second surface facing the electrode assembly, and the groove bottom surface of the riveting groove is closer to the electrode assembly than the second surface.

In the foregoing technical solution, the groove bottom surface of the riveting groove is set to be closer to the electrode assembly than the second surface of the wall portion facing the electrode assembly, so that the thickness of a region between the groove bottom surface of the riveting groove and the connection surface can be further increased, which helps further improve structural strength of the electrode terminal, thereby further improving connection strength and connection stability between the electrode terminal and the busbar component.

In some embodiments, the battery cell further includes a current collection member, where the current collection member is disposed between the wall portion and the electrode assembly, where the current collection member connects the electrode assembly and the electrode terminal, to electrically connect the electrode assembly and the electrode terminal.

In the foregoing technical solution, the battery cell is further provided with a current collection member. The current collection member connects the electrode terminal and the electrode assembly, to implement an electrical connection between the electrode assembly and the electrode terminal, thereby helping reduce the connection difficulty between the electrode assembly and the electrode terminal.

In some embodiments, at least a part of the current collection member is accommodated in the riveting groove and is connected to the groove bottom surface of the riveting groove.

In the foregoing technical solution, at least a part of the current collection member is configured to be accommodated in the riveting groove and be connected to the groove bottom surface of the riveting groove, so that the current collection member is a structure at least a part of which is inserted in the riveting groove. Therefore, by using this structure, the current collection member can be positioned to some extent, which helps improve assembly precision between the current collection member and the electrode terminal, and can reduce connection difficulty between the current collection member and the electrode terminal.

In some embodiments, the wall portion is provided with a mounting hole, and the mounting hole extends through the wall portion in the thickness direction of the wall portion; the battery cell further includes a sealing member, the sealing member is disposed between the wall portion and the electrode terminal, at least a part of the sealing member is located in the mounting hole, to seal a gap between the electrode terminal and a hole wall surface of the mounting hole, and the sealing member butts against a side of the flanged portion that faces away from the electrode assembly in the thickness direction of the wall portion; and the current collection member is welded to the groove bottom surface of the riveting groove.

In the foregoing technical solution, the current collection member is set as a structure welded to the groove bottom surface of the riveting groove, to improve connection strength and connection stability between the current collection member and the electrode terminal. In addition, by using the structure in which at least a part of the current collection member is inserted into the riveting groove and welded to the groove bottom surface of the riveting groove, a region in which the current collection member and the electrode terminal are welded to each other can be made to be far away from the sealing member, thereby effectively reducing impact on the sealing member when the current collection member and the electrode terminal are welded to each other, helping relieve a phenomenon of burnout of the sealing member, and further effectively improving a sealing effect of the sealing member on the electrode terminal and the hole wall surface of the mounting hole.

In some embodiments, the current collection member includes a base portion and a first convex portion, where the base portion is disposed between the electrode assembly and the wall portion in the thickness direction of the wall portion, where the base portion is connected to the electrode assembly; and the first convex portion is disposed on a side of the base portion facing away from the electrode assembly, where the first convex portion is inserted into the riveting groove and connected to the groove bottom surface of the riveting groove.

In the foregoing technical solution, the current collection member is provided with a base portion and a first convex portion that is convexly disposed on a side of the base portion facing away from the electrode assembly, and the first convex portion is inserted in the riveting groove and is connected to a groove bottom surface of the riveting groove, so that at least a part of the current collection member is accommodated in the riveting groove and is assembled and connected to the electrode terminal. By using the current collection member of such a structure, on the one hand, the current collection member is conveniently connected to the electrode terminal, helping reduce assembly difficulty between the current collection member and the electrode terminal, and in another aspect, through a structure in which the first convex portion is inserted in the first groove, a certain guiding and limiting function can be implemented in a mutual assembly process of the current collection member and the electrode terminal, helping improve assembly efficiency and assembly quality between the current collection member and the electrode terminal.

In some embodiments, in the thickness direction of the wall portion, the flanged portion is provided with a third surface facing the electrode assembly, the riveting groove is sunk from the third surface to a direction away from the electrode assembly, and the third surface butts against the base portion.

In the foregoing technical solution, the riveting groove of the electrode terminal is disposed on the third surface of the flanged portion facing the electrode assembly, and the third surface butts against the base portion of the current collection member in the thickness direction of the wall portion, so that the first convex portion of the current collection member is conveniently inserted into the riveting groove, and a contact area between the current collection member and the electrode terminal is further improved, to improve an overcurrent effect between the current collection member and the electrode terminal.

In some embodiments, in the thickness direction of the wall portion, a first groove is formed on a side of the current collection member facing the electrode assembly and at a position corresponding to the first convex portion.

In the foregoing technical solution, the first groove is formed on the side of the current collection member facing the electrode assembly and in the region corresponding to the first convex portion, so that the current collection member is a structure that can be formed through stamping, and the first convex portion and the first groove are respectively formed on two sides of the current collection member, thereby helping reduce manufacturing difficulty of the current collection member.

In some embodiments, the groove bottom surface of the riveting groove is convexly provided with a connection portion, and the connection portion is connected to the current collection member.

In the foregoing technical solution, the connection portion is convexly disposed on the groove bottom surface of the riveting groove, so that the current collection member is a structure connected to the connection portion to electrically connect the current collection member and the electrode terminal. The current collection member adopting this structure has a simple structure, thereby facilitating assembly. In addition, there is no need to dispose a protrusion structure inserted in the riveting groove on the current collection member, thereby helping reduce machining difficulty of the current collection member.

In some embodiments, the wall portion is provided with a mounting hole, and the mounting hole extends through the wall portion in the thickness direction of the wall portion; the battery cell further includes a sealing member, the sealing member is disposed between the wall portion and the electrode terminal, at least a part of the sealing member is located in the mounting hole, to seal a gap between the electrode terminal and a hole wall surface of the mounting hole, and the sealing member butts against a side of the flanged portion that faces away from the electrode assembly in the thickness direction of the wall portion; and the current collection member is welded to the connection portion.

In the foregoing technical solution, the current collection member is set as a structure welded to the connection portion, to improve connection strength and connection stability between the current collection member and the electrode terminal. In addition, by using the structure in which the current collection member is welded to the connection portion that is convexly disposed on the groove bottom surface of the riveting groove, a region in which the current collection member and the electrode terminal are welded to each other can be made to be far away from the sealing member, thereby effectively reducing impact on the sealing member when the current collection member and the electrode terminal are welded to each other, helping relieve a phenomenon of burnout of the sealing member, and further effectively improving a sealing effect of the sealing member on the electrode terminal and the hole wall surface of the mounting hole.

In some embodiments, in the thickness direction of the wall portion, the flanged portion is provided with a third surface facing the electrode assembly, the riveting groove is sunk from the third surface to a direction away from the electrode assembly, and an end surface at an end of the connection portion facing the electrode assembly is flush with the third surface.

In the foregoing technical solution, the end surface at the end of the connection portion that faces the electrode assembly is set to be flush with the third surface of the flanged portion provided with the riveting groove, so that a dimension of the connection portion in the thickness direction of the wall portion is equal to a groove depth of the riveting groove, thereby making it convenient to set a side of the current collection member that faces the connection portion as a planar structure. In an aspect, machining difficulty of the current collection member can be reduced. In another aspect, mutual butting between the current collection member and the third surface can be achieved while connection difficulty between the current collection member and the connection portion is reduced, which helps improve an overcurrent area between the current collection member and the electrode terminal.

In some embodiments, in the thickness direction of the wall portion, the flanged portion is provided with a third surface facing the electrode assembly, the riveting groove is sunk from the third surface to a direction away from the electrode assembly, and the connection portion projects out of the third surface.

In the foregoing technical solution, the connection portion is configured to project, in the thickness direction of the wall portion, from the third surface of the flanged portion provided with the riveting groove, so that the end surface at the end of the connection portion facing the electrode assembly is closer to the electrode assembly than the third surface of the flanged portion provided with the riveting groove. Therefore, mutual connection between the current collection member and the connection portion is facilitated, which helps reduce a phenomenon of poor connection quality between the current collection member and the connection portion caused by existence of a gap between the current collection member and the connection portion.

In some embodiments, in the thickness direction of the wall portion, a side of the current collection member facing away from the electrode assembly is provided with a second groove; and the connection portion is inserted into the second groove and connected to a groove bottom surface of the second groove.

In the foregoing technical solution, the second groove is disposed on the side of the current collection member facing away from the electrode assembly, and the connection portion is inserted in the second groove and connected to the groove bottom surface of the second groove. Therefore, by using this structure, the current collection member can be positioned to some extent, which helps improve assembly precision between the current collection member and the electrode terminal, and can reduce connection difficulty between the current collection member and the electrode terminal.

In some embodiments, in the thickness direction of the wall portion, a second convex portion is formed on a side of the current collection member facing the electrode assembly and at a position corresponding to the second groove.

In the foregoing technical solution, the second convex portion is formed on the side of the current collection member facing the electrode assembly and in the region corresponding to the second groove, so that the current collection member is a structure that can be formed through stamping, and the second groove and the second convex portion are respectively formed on two sides of the current collection member, thereby helping reduce manufacturing difficulty of the current collection member.

In some embodiments, in the thickness direction of the wall portion, the flanged portion is provided with a third surface facing the electrode assembly, the riveting groove is sunk from the third surface to a direction away from the electrode assembly, and the third surface butts against the current collection member.

In the foregoing technical solution, the riveting groove of the electrode terminal is disposed on the third surface of the flanged portion facing the electrode assembly, and the third surface butts against the current collection member in the thickness direction of the wall portion, so that a contact area between the current collection member and the electrode terminal is further improved, to improve an overcurrent effect between the current collection member and the electrode terminal.

In some embodiments, the wall portion is provided with a mounting hole, and the mounting hole extends through the wall portion in the thickness direction of the wall portion; the electrode terminal further includes a body portion and a limiting portion, where the body portion is threaded through the mounting hole in the thickness direction of the wall portion, where the flanged portion is connected to an end of the body portion close to the electrode assembly; and the limiting portion is connected to an end of the body portion facing away from the electrode assembly, where in the thickness direction of the wall portion, the connection surface is formed at an end of the limiting portion facing away from the electrode assembly, the limiting portion is located on a side of the wall portion facing away from the electrode assembly, and the limiting portion and the flanged portion are configured to collaboratively hold the wall portion.

In the foregoing technical solution, the electrode terminal is provided with the body portion threaded through the mounting hole, and two ends of the body portion in the thickness direction of the wall portion are respectively connected to the limiting portion and the flanged portion, where the limiting portion and the flanged portion are respectively located on a side of the wall portion facing away from the electrode assembly and a side of the wall portion facing the electrode assembly in the thickness direction of the wall portion, so that the flanged portion of the electrode terminal can cooperate with the limiting portion to hold the wall portion after being riveted and flanged, and the electrode terminal is riveted and fixed to the wall portion from inside the housing. Therefore, a connection surface for connecting to the busbar component is formed on a side of the limiting portion facing away from the electrode assembly, to facilitate increase in a connection area between the busbar component and the electrode terminal, thereby effectively improving connection stability and connection reliability between the electrode terminal and the busbar component.

In some embodiments, the battery cell further includes a first insulated member, where in the thickness direction of the wall portion, at least a part of the first insulated member is located between the flanged portion and the wall portion, to insulate and isolate the flanged portion from the wall portion.

In the foregoing technical solution, the battery cell is further provided with the first insulated member, and at least a part of the first insulated member is located between the flanged portion and the wall portion, so that the first insulated member can play a role in insulating and isolating the flanged portion from the wall portion, thereby reducing a risk of short circuiting between the flanged portion and the wall portion and improving use reliability of the battery cell.

In some embodiments, the battery cell further includes a second insulated member, where in the thickness direction of the wall portion, at least a part of the second insulated member is located between the limiting portion and the wall portion, to insulate and isolate the limiting portion from the wall portion.

In the foregoing technical solution, the battery cell is further provided with the second insulated member, and at least a part of the second insulated member is located between the limiting portion and the wall portion, so that the second insulated member can play a role in insulating and isolating the limiting portion from the wall portion, thereby reducing a risk of short circuiting between the limiting portion and the wall portion and improving use reliability of the battery cell.

In some embodiments, in the thickness direction of the wall portion, a side of the wall portion that faces away from the electrode assembly is provided with an accommodating groove, the mounting hole is disposed on a groove bottom surface of the accommodating groove, and at least a part of the second insulated member is accommodated in the accommodating groove.

In the foregoing technical solution, An accommodating groove for accommodating the second insulated member is provided on a side of the wall portion facing away from the electrode assembly, thereby making it convenient to assemble the second insulated member between the limiting portion and the wall portion, which can play a role in assembling and positioning the second insulated member, to help reduce assembly difficulty of the second insulated member, and can play a role in protecting the second insulated member to some extent, to reduce a phenomenon such as wear or damage that occurs on the second insulated member during use.

In some embodiments, the electrode terminal includes a first material layer and a second material layer that are composited with each other, the first material layer and the second material layer are stacked in the thickness direction of the wall portion, the first material layer is located on a side of the second material layer facing the electrode assembly, and the connection surface is formed on a side of the second material layer facing away from the first material layer; and a material of the first material layer is different from a material of the second material layer, the first material layer is used for connecting to a tab of the electrode assembly, the material of the first material layer is the same as a material of the tab of the electrode assembly, the second material layer is used for connecting to the busbar component, and the material of the second material layer is the same as a material of the busbar component.

In the foregoing technical solution, the electrode terminal is set to be formed by the first material layer and the second material layer that are stacked and composited and connected to each other in the thickness direction of the wall portion, where a material of the first material layer is the same as a material of the tab of the electrode assembly, and a material of the second material layer is the same as a material of the busbar component, so that the electrode terminal can connect the busbar component and the tab of the electrode assembly that are made of different materials. Therefore, by using the electrode terminal of this structure, a connection between the tab of the electrode assembly and the busbar component that are made of different materials can be implemented, which helps improve an overcurrent effect, and can alleviate a quality problem caused by mutual assembly and connection between different materials.

In some embodiments, the housing includes a case and an end cover, where an accommodating cavity with an opening is formed inside the case, where the accommodating cavity is configured to accommodate the electrode assembly; the end cover closes the opening; and where the end cover is the wall portion.

In the foregoing technical solution, the wall portion of the housing is set as an end cover of the housing used for closing the opening of the case. By using the battery cell of this structure, assembly of the electrode terminal on the end cover is facilitated, and mutual assembly and connection between the electrode terminal and the electrode assembly are facilitated, which helps reduce assembly difficulty of the battery cell, to improve production efficiency of the battery cell.

In some embodiments, the housing includes a case and an end cover, where the case includes a side wall and the wall portion that are integrally formed, where the side wall is disposed around the wall portion, the side wall has one end connected to the wall portion and the other end encircling an opening in the thickness direction of the wall portion, and the side wall and the wall portion jointly define an accommodating cavity for accommodating the electrode assembly; and the end cover closes the opening.

In the foregoing technical solution, the wall portion of the housing is set as a wall of the case that is disposed opposite to the end cover in the thickness direction of the wall portion, the battery cell using this structure enables a region of the housing in which the electrode terminal is mounted to be away from the end cover, and there is no direct connection relationship between the wall portion and the end cover, so that a phenomenon that a force that is generated when a component such as the electrode terminal pulls or twists the wall portion acts on the end cover can be relieved, to reduce a risk that a connection between the end cover and the case fails, thereby helping reduce a risk that liquid leakage occurs during use of the battery cell.

According to a second aspect, an example of the present application further provides a battery, including the foregoing battery cell.

According to a third aspect, an example of the present application further provides a power consuming apparatus, including the foregoing battery cell. The battery cell is configured to supply electric energy.

### BRIEF DESCRIPTION OF THE DRAWINGS

To describe the technical solutions of the embodiments of the present application more clearly, the following briefly introduces the accompanying drawings required to be used in the embodiments. It should be understood that the accompanying drawings in the following description show only some embodiments of the present application and therefore should not be regarded as limiting the scope, and a person of ordinary skill in the art may still derive other drawings from these accompanying drawings without creative efforts.
FIG. 1 is a schematic structural diagram of a vehicle provided in some embodiments of the present application;
FIG. 2 is an exploded view of a structure of a battery according to some examples of the present application;
FIG. 3 is a schematic diagram of a structure of a battery cell according to some embodiments of the present application;
FIG. 4 is an exploded view of a structure of a battery cell according to some examples of the present application;
FIG. 5 is a partial cross-sectional view of a battery cell according to some embodiments of the present application;
FIG. 6 is a schematic diagram of connection of a busbar component to an electrode terminal and a current collection member of a battery cell according to some embodiments of the present application;
FIG. 7 is a cross-sectional view of an electrode terminal of a battery cell according to some embodiments of the present application;
FIG. 8 is a local cross-sectional view of a battery cell provided by some other embodiments of the present application;
FIG. 9 is a cross-sectional view of an electrode terminal of a battery cell according to some other embodiments of the present application;
FIG. 10 is a partial cross-sectional view of a battery cell according to still some other embodiments of the present application; and
FIG. 11 is a cross-sectional view of an electrode terminal of a battery cell according to some embodiments of the present application in another embodiment.

Reference numerals: 1000: vehicle; 100: battery; 10: box; 11: first box body; 12: second box body; 20: battery cell; 21: housing; 211: wall portion; 2111: mounting hole; 2112: first surface; 2113: second surface; 2114: accommodating groove; 212: case; 2121: opening; 213: end cover; 22: electrode assembly; 221: tab; 23: electrode terminal; 231: flanged portion; 2311: third surface; 232: connection surface; 233: riveting groove; 2331: connection portion; 234: body portion; 235: limiting portion; 236: first material layer; 237: second material layer; 24: first insulated member; 25: second insulated member; 26: sealing member; 27: current collection member; 271: base portion; 272: first convex portion; 273: first groove; 274: second groove; 275: second convex portion; 30: busbar component; 200: controller; 300: motor; and X: thickness direction of the wall portion.

### DETAILED DESCRIPTION

To make the objectives, technical solutions, and advantages of embodiments of the present application clearer, the following clearly describes the technical solutions in embodiments of the present application with reference to the accompanying drawings in embodiments of the present application. It is clear that the described embodiments are merely some rather than all of embodiments of the present application. All other embodiments obtained by those of ordinary skill in the art based on the embodiments of the present application without creative efforts shall fall within the protection scope of the present application.

Unless otherwise defined, all technical and scientific terms used in the present application have same meanings as commonly understood by a person skilled in the technical field of the present application. The terms used in the specification of the present application are merely for an objective of describing specific examples, and are not intended to limit the present application. The terms "include", "have" and any variations thereof in the specification and claims of the present application and in the foregoing descriptions of the accompanying drawings are intended to cover non-exclusive inclusion. In the specification and claims, or accompanying drawings of the present application, the terms "first", "second", and so on are intended to distinguish similar objects but do not necessarily indicate a specific order or primary and secondary relation.

The reference to "examples" in the present application means that specific features, structures, or characteristics described with reference to examples may be included in at least one example of the present application. Appearances of the phrase in various positions in this specification are not necessarily all referring to a same embodiment, nor are separate or alternative embodiments mutually exclusive of another embodiment.

In the descriptions of the present application, it should be noted that unless otherwise explicitly specified or defined, the terms such as "mount", "connect", "connection", and "attach" should be understood in a broad sense. For example, the connection may be a fixed connection, a detachable connection, or an integral connection. Alternatively, the connection may be a direct connection, an indirect connection through an intermediary, or internal communication between two components. For those of ordinary skill in the art, the specific meanings of the foregoing terms in the present application can be understood according to specific situations.

In the present application, the term "and/or" is merely an association to describe associated objects. It may mean that there are three relationships, such as A and/or B, indicating that A exists alone, A and B exist at the same time, and B exists alone. In addition, in the present application, the character "/" generally indicates an "or" relationship between the associated objects.

In the embodiments of the present application, same reference numerals represent same components, and for brevity, detailed description of the same components is omitted in different embodiments. It should be understood that the dimensions such as the thickness, the length, and the width of various components in the embodiments of the present application and the entire thickness, length, and width of an integrated apparatus are merely exemplary description, and should not be construed as any limitation to the present application.

The term "a plurality of" as used in the present application refers to two or more (inclusive of two).

In the embodiments of the present application, the battery cell may be a secondary battery, and the secondary battery refers to a battery cell that can be used continually by activating an active material in a charging method after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. This is not limited in this embodiment of the present application.

The battery cell generally includes an electrode assembly. The electrode assembly includes a positive electrode, a negative electrode, and an isolation member. During the charging and discharging process of the battery cell, active ions (for example, lithium ions) are intercalated and deintercalated back and forth between the positive electrode and the negative electrode. The isolation member is disposed between the positive electrode and the negative electrode, and may serve to prevent a short circuit between the positive electrode and the negative electrode while allowing the active ions to pass through.

In some embodiments, the positive electrode may be a positive electrode plate, and the positive electrode plate includes a positive electrode current collector and a positive electrode active material arranged on at least one surface of the positive electrode current collector.

For example, the positive electrode current collector has two surfaces opposite to each other in a thickness direction of the positive electrode current collector, and the positive electrode active material is arranged on either or both of the two opposite surfaces of the positive electrode current collector.

By way of example, the positive electrode current collector can be a metal foil or a composite current collector. For example, the metal foil may be made of silver-surface-processed aluminum, silver-surface-processed stainless steel, stainless steel, copper, aluminum, nickel, a carbon electrode, carbon, nickel, or titanium. The composite current collector can include a polymer material substrate layer and a metal layer. The composite current collector can be formed by forming a metal material (aluminum, aluminum alloy, nickel, nickel alloy, titanium, titanium alloy, silver, and silver alloy) on a polymer material substrate (for example, polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and respective modified compounds thereof. However, the present application is not limited to such materials, and other conventional materials capable of being used as a positive electrode active material for batteries may also be used. These positive electrode active materials may be used alone or as a combination of two or more. An example of the lithium-containing phosphate may include, but is not limited to, at least one of lithium iron phosphate (for example, LiFePO₄ (also referred to as LFP for short)), a composite material of lithium iron phosphate and carbon, lithium manganese phosphate (for example, LiMnPO₄), a composite material of lithium manganese phosphate and carbon, lithium iron manganese phosphate, and a composite material of lithium manganese iron phosphate and carbon. An example of the lithium transition metal oxide may include, but is not limited to, at least one of a lithium cobalt oxide (for example, LiCoO₂), a lithium nickel oxide (for example, LiNiO₂), a lithium manganese oxide (for example, LiMnO₂ or LiMn₂O₄), a lithium nickel cobalt oxide, a lithium manganese cobalt oxide, a lithium nickel manganese oxide, a lithium nickel cobalt manganese oxide (for example, LiNi_{1/3}Co_{1/3}Mn_{1/3}O₂ (which may also be referred to as NCM₃₃₃ for short)), LiNi_{0.5}Co_{0.2}Mn_{0.3}O₂ (which may also be referred to as NCM₅₂₃ for short), LiNi_{0.5}Co_{0.25}Mn_{0.25}O₂ (which may also be referred to as NCM₂₁₁ for short), LiNi_{0.6}Co_{0.2}Mn_{0.2}O₂ (which may also be referred to as NCM₆₂₂ for short), LiNi_{0.8}Co_{0.1}Mn_{0.1}O₂ (which may also be referred to as NCM₈₁₁ for short), a lithium nickel cobalt aluminum oxide (for example, LiNi_{0.85}Co_{0.15}Al_{0.05}O₂), and modified compounds thereof.

In some embodiments, the positive electrode may be made of foamed metal. The foamed metal may be foamed nickel, foamed copper, foamed aluminum, a foamed alloy, or the like. When the foamed metal is used as the positive electrode, a surface of the foamed metal may be not provided with the positive electrode active material or certainly may be provided with the positive electrode active material. For example, a lithium source material, potassium metal, or sodium metal may further be filled and/or deposited in the foamed metal, and the lithium source material is lithium metal and/or a lithium-rich material.

In some embodiments, the negative electrode may be a negative electrode plate, and the negative electrode plate may include a negative electrode current collector.

For example, the negative electrode current collector may be a metal foil, foamed metal, or a composite current collector. For example, as the metal foil, a silver-surface-processed aluminum or stainless steel, stainless steel, copper, aluminum, nickel, a carbon electrode, nickel, or titanium may be used. The foamed metal may be foamed nickel, foamed copper, foamed aluminum, a foamed alloy, or the like. The composite current collector can include a polymer material substrate layer and a metal layer. The composite current collector can be formed by forming a metal material (copper, copper alloy, nickel, nickel alloy, titanium, titanium alloy, silver, and silver alloy) on a polymer material substrate (for example, a substrate of polypropylene, polyethylene terephthalate, polybutylene terephthalate, polystyrene, or polyethylene).

As an example, the negative electrode plate includes a negative electrode current collector and a negative electrode active material provided on at least one surface of the negative electrode current collector.

For example, the negative electrode current collector has two surfaces opposite to each other in a thickness direction of the negative electrode current collector, and the negative electrode active material is disposed on either or both of the two opposite surfaces of the negative electrode current collector.

For example, the negative electrode active material can be a negative electrode active material well known in the art for battery cells. As an example, the negative electrode active material may include at least one of the following materials: artificial graphite, natural graphite, soft carbon, hard carbon, a silicon-based material, a tin-based material, lithium titanate, or the like. The silicon-based material may be at least one selected from monatomic silicon, silicon-oxygen compound, silicon-carbon composite, silicon-nitrogen composite, and silicon alloy. The tin-based material may be at least one selected from monatomic tin, tin-oxygen compound, and tin alloy. However, the present application is not limited to such materials, and may alternatively use other conventional materials that can be used as negative electrode active materials for batteries. These negative electrode active materials may be used alone or in combination with two or more.

In some embodiments, a material of the positive electrode current collector may be aluminum, and a material of the negative electrode current collector may be copper.

In some implementations, the electrode assembly further includes an isolation member, and the isolation member is arranged between the positive electrode and the negative electrode.

In some implementations, the isolation member is a separator. There may be multiple types of separators, and any well-known separator with a porous structure having good chemical stability and mechanical stability may be selected.

For example, a material of the separator may include at least one of glass fiber, non-woven fabric, polyethylene, polypropylene, or polyvinylidene fluoride. The separator may be a single-layer film or a multilayer composite film. When the separator is a multi-layer composite film, materials of the layers may be the same or different. The isolation member may be an independent component located between the positive electrode and the negative electrode or may be attached to surfaces of the positive electrode and the negative electrode.

In some implementations, the isolation member is a solid electrolyte. The solid electrolyte is arranged between the positive electrode and the negative electrode, to transmit ions and separate the positive electrode from the negative electrode.

In some implementations, the battery cell further includes an electrolyte. The electrolyte transmits ions between the positive electrode and the negative electrode. The electrolyte may be liquid, gelled, or solid. The liquid electrolyte includes an electrolyte salt and a solvent.

In some implementations, the electrolyte salt may include at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some implementations, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may optionally be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

The gelled electrolyte includes a skeleton network using a polymer as an electrolyte, with an ionic liquid-lithium salt.

The solid electrolyte includes a polymeric solid electrolyte, an inorganic solid electrolyte, and a composite solid electrolyte.

For example, the polymeric solid electrolyte may be polyether (polyoxyethylene), polysiloxane, polycarbonate, polyacrylonitrile, polyvinylidene fluoride, polymethylmethacrylate, single-ionic polymer, a polyionic liquid-lithium salt, or cellulose.

For example, the inorganic solid electrolyte may include one or more of an oxide solid electrolyte (crystalline perovskite, a sodium superionic conductor, garnet, an amorphous LiPON film), a sulfide solid electrolyte (a crystalline lithium superionic conductor (lithium germanium phosphorus sulfur or argyrodite) or an amorphous sulfide), a halide solid electrolyte, a nitride solid electrolyte, and a hydride solid electrolyte.

For example, the composite solid electrolyte is formed by filling the inorganic solid electrolyte into the polymeric solid electrolyte.

In some implementations, the electrode assembly is of a wound structure. The positive electrode plate and the negative electrode plate are wound into wound structures.

In some implementations, the electrode assembly is a laminated structure.

For example, a plurality of positive electrode plates and a plurality of negative electrode plates may be arranged respectively, and the plurality of positive electrode plates and the plurality of negative electrode plates are alternately stacked.

For example, a plurality of positive electrode plates may be arranged, the negative electrode plate may be folded to form a plurality of folding segments that are stacked, and one positive electrode plate is clamped between adjacent folding segments.

For example, the positive electrode plate and the negative electrode plate are both folded to form a plurality of folding segments that are stacked.

For example, a plurality of isolation members may be arranged, which are respectively arranged between any adjacent positive electrode plates or negative electrode plates.

For example, the isolation members may be continuously arranged, and are arranged between any adjacent positive electrode plates or negative electrode plates in a folding or winding manner.

In some implementations, the electrode assembly may be in a shape of a cylinder, a flat shape, or a polygon prism.

In some implementations, the electrode assembly is provided with a tab, and the tab may output a current from the electrode assembly. The tab includes a positive electrode tab and a negative electrode tab.

In some embodiments, the battery cell may include a housing. The housing is configured to encapsulate components such as the electrode assembly and the electrolyte. The housing may be a steel housing, an aluminum housing, a plastic housing (for example, polypropylene), a composite metal housing (for example, a copper-aluminum composite housing), an aluminum-plastic film, or the like.

As an example, the battery cell may be a cylindrical battery cell, a prismatic battery cell, a pouch battery cell, or a battery cell in another shape. The prismatic battery cell includes, but is not limited to, a square battery cell, a blade battery cell, and a polygonal prism battery. For example, the polygonal prism battery may be a hexagonal prism battery, or the like.

The battery mentioned in the embodiments of the present application is a single physical module including one or more battery cells to provide a higher voltage and a higher capacity.

In some embodiments, a battery may be a battery module. When there are a plurality of battery cells, the plurality of battery cells are arranged and fixed to form a battery module.

In some embodiments, the battery may be a battery pack. The battery pack includes a box and a battery cell, and the battery cell or the battery module is accommodated in the box.

In some embodiments, the box may be used as a part of a chassis structure of a vehicle. For example, a part of the box may become at least a part of a floor of the vehicle, or a part of the box may become at least a part of a cross beam and a longitudinal beam of the vehicle.

In some embodiments, the battery may be an energy storage apparatus. The energy storage apparatus includes an energy storage container, an energy storage electric cabinet, or the like.

The battery has outstanding advantages such as a high energy density, a small environmental pollution, a large power density, a long service life, a wide adaptation range, and a small self-discharging coefficient, and is an important component of the development of new energy sources nowadays. For the development of the battery technology, design factors in many aspects, for example, performance parameters such as an energy density, a cycle life, discharge capacity, and a charge-discharge rate need to be considered simultaneously, and the use stability of the battery also needs to be considered.

For a common battery cell, a housing of the battery cell usually includes a case and an end cover, and the end cover covers an opening of the case. To facilitate assembly of the battery cell, generally, an electrode terminal is riveted and assembled to the end cover of the battery cell, so that when the end cover covers the case, the electrode terminal can be first welded to a tab of an electrode assembly by using a current collection member disposed in the case, to implement an electrical connection between the electrode terminal and the electrode assembly. Therefore, the electrode terminal serves as an output electrode of the battery cell, to implement input or output of electric energy of the battery cell. Finally, the end cover is connected to the case.

A busbar component is usually disposed in a battery, and a plurality of battery cells can be connected to each other in series, parallel, or series-parallel connection by connecting the busbar component to electrode terminals of the battery cells. However, because the electrode terminal needs to be assembled to the end cover and two ends of the electrode terminal need to extend out of two sides of the end cover, the thickness of the electrode terminal is large, which greatly increases the difficulty of welding between the electrode terminal and both the current collection member and the busbar component, which goes against improving the production efficiency of the battery. To resolve the problem of high difficulty in welding between the electrode terminal and both the current collection member and the busbar component, in the related technology, the electrode terminal is usually set as a split structure, including two parts: a terminal body and a cover plate. A riveting groove is formed at one end of the terminal body that faces away from the current collection member, to reduce the thickness of the electrode terminal, and one end of the terminal body provided with the riveting groove is riveted onto the end cover, thereby reducing the difficulty in welding between the electrode terminal and the current collection member, to implement a connection relationship between the electrode terminal and the current collection member through welding between the terminal body and the current collection member. Then, the cover plate is welded at a side of the terminal body that faces away from the current collection member, so that the cover plate covers the riveting groove and welds the cover plate and the terminal body to each other, and one end of the electrode terminal far away from the current collection member and the busbar component in the battery are welded to each other. However, in the battery cell of such a structure, the welding mark formed by mutual welding of the cover plate and the terminal body occupies a large space on one end of the electrode terminal far away from the current collection member. Consequently, a connection area between the electrode terminal and the busbar component is reduced, and an assembly space is limited. As a result, connection stability between the electrode terminal of the battery cell in the battery and the busbar component is poor. Because the battery has a use operation condition such as shaking or moving during use, the connection failure easily occurs between the battery cell in the battery and the busbar component. Consequently, the use stability of the battery is poor and the service life is short.

Based on the foregoing considerations, to resolve problems of poor use stability and short service life of a battery, an example of the present application provides a battery cell. The battery cell includes a housing, an electrode assembly, and an electrode terminal. The housing is provided with a wall portion. The electrode assembly is accommodated in the housing. The electrode terminal is riveted on the wall portion, and the electrode terminal is electrically connected to the electrode assembly. The electrode terminal includes a flanged portion; in a thickness direction of the wall portion, the flanged portion is formed at an end of the electrode terminal close to the electrode assembly and located on a side of the wall portion facing the electrode assembly, to rivet the electrode terminal onto the wall portion; an end of the electrode terminal facing away from the electrode assembly forms a continuous connection surface, and the connection surface is used for connecting to a busbar component.

In the battery cell of this structure, the flanged portion of the electrode terminal is formed at an end of the electrode terminal close to the electrode assembly and located on a side of the wall portion facing the electrode assembly, and a connection surface used for connecting to a busbar component is formed at an end of the electrode terminal facing away from the electrode assembly, so that the electrode terminal is a structure riveted onto the wall portion from inside the housing, and an end of the electrode terminal riveted onto the wall portion at which the flanged portion is formed is used for electrically connecting to the electrode assembly. Therefore, there is no need to perform riveting on an end of the electrode terminal that is configured to connect to the busbar component and form a groove structure, and there is no need to connect a cover plate configured to block the groove structure to the electrode terminal, so that the busbar component can be directly connected to a continuous connection surface at an end of the electrode terminal that faces away from the electrode assembly, to reduce interference impact of a welding mark formed through welding between the cover plate and the electrode terminal on the busbar component, and help increase a connection area between the busbar component and the electrode terminal. Therefore, connection stability and connection reliability between the electrode terminal and the busbar component can be effectively improved, to reduce a risk that a connection failure occurs between the electrode terminal of the battery cell and the busbar component during use, thereby helping improve use stability and service life of a battery having such a battery cell.

The battery cell disclosed in this example of the present application may be used in but is not limited to a power consuming apparatus such as a vehicle, a ship, or an aircraft. The battery cell and the battery disclosed in the present application may be used for forming a power supply system of the power consuming apparatus. In this way, it is beneficial to alleviate a problem that a connection failure occurs between a battery cell and a busbar component in a battery during use, to improve the use stability and the service life of the battery.

An embodiment of the present application provides a power consuming apparatus using a battery as a power supply. The power consuming apparatus may be, but is not limited to, a mobile phone, a tablet, a laptop, an electric toy, an electric tool, a battery car, an electric automobile, a ship, a spacecraft, or the like. The electric toy may include a fixed or mobile electric toy, such as a game machine, an electric vehicle toy, an electric ship toy and an electric airplane toy, and the spacecraft may include an airplane, a rocket, an aerospaceplane, a spaceship, and the like.

For ease of description, the following embodiment is described by using an example in which a power consuming apparatus according to an embodiment of the present application is a vehicle.

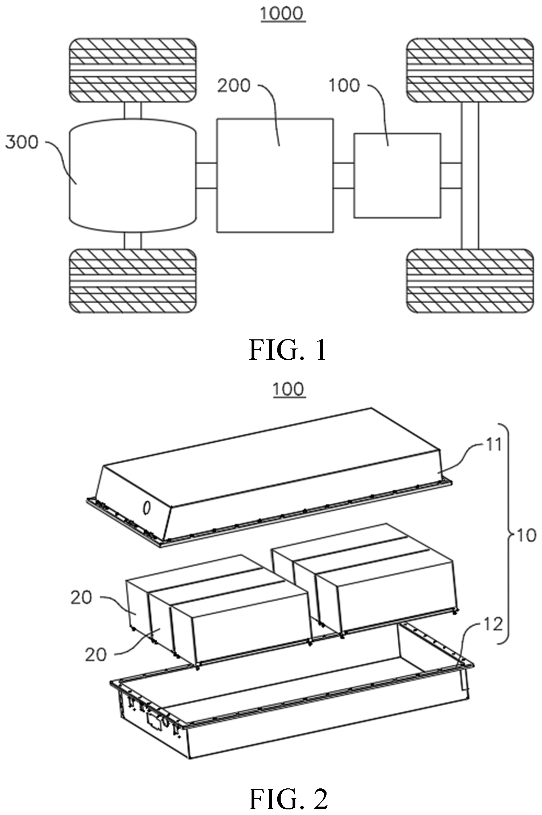

Referring to FIG. 1, FIG. 1 is a schematic diagram of a structure of a vehicle 1000 according to some embodiments of the present application. The vehicle 1000 may be a fuel powered vehicle, a gas powered vehicle, or a new energy vehicle, and the new energy vehicle may be a pure electric vehicle, a hybrid electric vehicle, or an extended-range vehicle. The vehicle 1000 is internally provided with a battery 100. The battery 100 may be arranged at the bottom of the vehicle 1000, the head of the vehicle 1000, or the tail of the vehicle 1000. The battery 100 may be configured to supply power to the vehicle 1000. For example, the battery 100 may be used as an operating power supply or a use power supply of the vehicle 1000. The vehicle 1000 may further include a controller 200 and a motor 300. The controller 200 is configured to control the battery 100 to supply power to the motor 300, for example, to meet operating electricity requirements during starting, navigation, and traveling of the vehicle 1000.

In some embodiments of the present application, the battery 100 can not only serve as an operating power supply or a use power supply of the vehicle 1000, but can also serve as a driving power supply of the vehicle 1000, in place of or partially in place of fuel or natural gas, to provide driving power for the vehicle 1000.

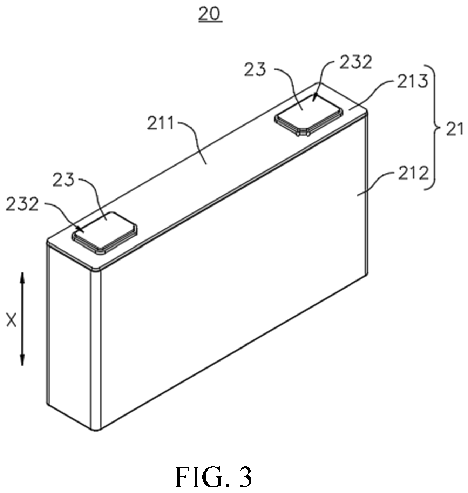

Refer to FIG. 2 and FIG. 3. FIG. 2 is an exploded view of a structure of a battery 100 according to some examples of the present application. FIG. 3 is a schematic diagram of a structure of a battery cell 20 according to some examples of the present application. The battery 100 includes a box 10 and a battery cell 20. The battery cell 20 is accommodated in the box 10.

The box 10 is configured to provide an assembly space for the battery cells 20, and the box 10 may use a plurality of structures. In some embodiments, the box 10 may include a first box body 11 and a second box body 12, the first box body 11 and the second box body 12 cover each other, and the first box body 11 and the second box body 12 jointly define the assembly space for accommodating the battery cells 20. The second box body 12 may be a hollow structure being open on one side, the first box body 11 may be a plate-like structure, and the first box body 11 covers an open side of the second box body 12, so that the first box body 11 and the second box body 12 jointly define the assembly space. Alternatively, each of the first box body 11 and the second box body 12 may be a hollow structure being open on one side, and an open side of the first box body 11 covers an open side of the second box body 12.

Certainly, the box 10 formed by the first box body 11 and the second box body 12 may be in various shapes, such as a cylinder, a cuboid, or a cube. For example, in FIG. 2, the shape of the box 10 is a cuboid.

In the battery 100, there may be one or more battery cells 20 disposed in the box 10. When there are a plurality of battery cells 20 disposed in the box 10, the plurality of battery cells 20 may be connected in series, parallel, or series-parallel. The series-parallel connection means that both series connection and parallel connection exist among the plurality of battery cells 20. The plurality of battery cells 20 may be directly connected in series, parallel, or series-parallel together, and then a whole formed by the plurality of battery cells 20 may be accommodated in the box body 10. Certainly, the battery 100 may alternatively be in the form of a plurality of battery modules formed by the plurality of battery cells 20 that are first connected in series, parallel, or series-parallel, and the plurality of battery modules are then connected in series, parallel, or series-parallel to form a whole and wholly accommodated in the box body 10.

In some embodiments, the battery 100 may further include other structures. For example, the battery 100 may further include a busbar component 30 (not shown in the figure). The busbar component 30 is configured to connect a plurality of battery cells 20, to implement an electric connection between the plurality of battery cells 20.

Each battery cell 20 may be a secondary battery or a primary battery; or may be a lithium-sulfur battery, a sodium-ion battery, or a magnesium-ion battery, but is not limited thereto. The battery cell 20 may be cuboid, cylindrical, prismoidal, or in other shapes. For example, in FIG. 3, the battery cell 20 has a cuboid structure.

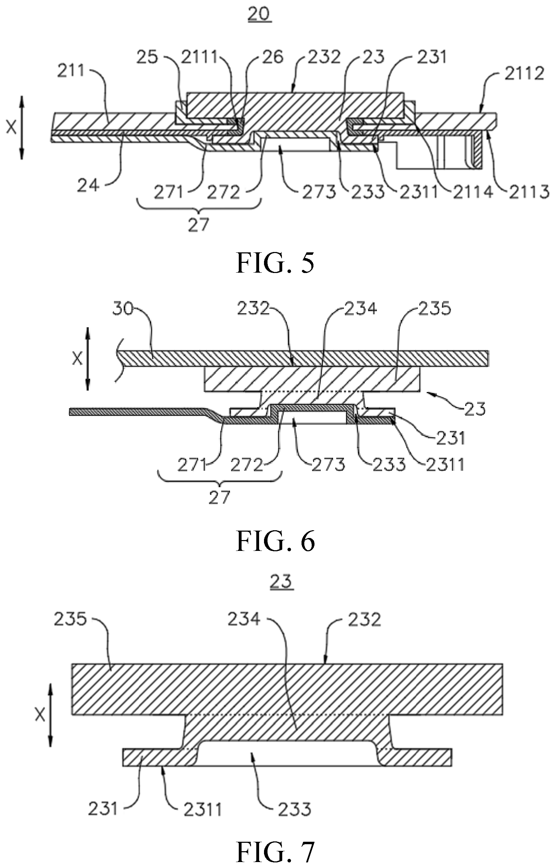

According to some embodiments of the present application, Referring to FIG. 3, and further referring to FIG. 4, FIG. 5, FIG. 6, and FIG. 7, FIG. 4 is an exploded view of a structure of a battery cell 20 according to some examples of the present application, FIG. 5 is a partial cross-sectional view of a battery cell 20 according to some embodiments of the present application, FIG. 6 is a schematic diagram of connection of a busbar component 30 to an electrode terminal 23 and a current collection member 27 of a battery cell 20 according to some embodiments of the present application, and FIG. 7 is a cross-sectional view of an electrode terminal 23 of a battery cell 20 according to some embodiments of the present application. The present application provides a battery cell 20. The battery cell 20 includes a housing 21, an electrode assembly 22, and an electrode terminal 23. The housing 21 is provided with a wall portion 211. The electrode assembly 22 is accommodated in the housing 21. The electrode terminal 23 is riveted on the wall portion 211, and the electrode terminal 23 is electrically connected to the electrode assembly 22. The electrode terminal 23 includes a flanged portion 231; in a thickness direction X of the wall portion, the flanged portion 231 is formed at an end of the electrode terminal 23 close to the electrode assembly 22 and located on a side of the wall portion 211 facing the electrode assembly 22, to rivet the electrode terminal 23 onto the wall portion 211; an end of the electrode terminal 23 facing away from the electrode assembly 22 forms a continuous connection surface 232, and the connection surface 232 is used for connecting to a busbar component 30.

The housing 21 may be further configured to accommodate an electrolyte, for example, an electrolyte solution. The housing 21 may be in various structural forms. The housing 21 may alternatively be made of various materials, such as copper, iron, aluminum, steel, or an aluminum alloy.

In some embodiments, the housing 21 may include a case 212 and an end cover 213. An accommodating cavity is formed inside the case 212, and the accommodating cavity has an opening 2121. To be specific, the case 212 has a hollow structure that is open at one end. The end cover 213 covers the opening 2121 of the case 212 and forms a sealing connection, to form a sealed space for accommodating the electrode assembly 22 and the electrolyte.

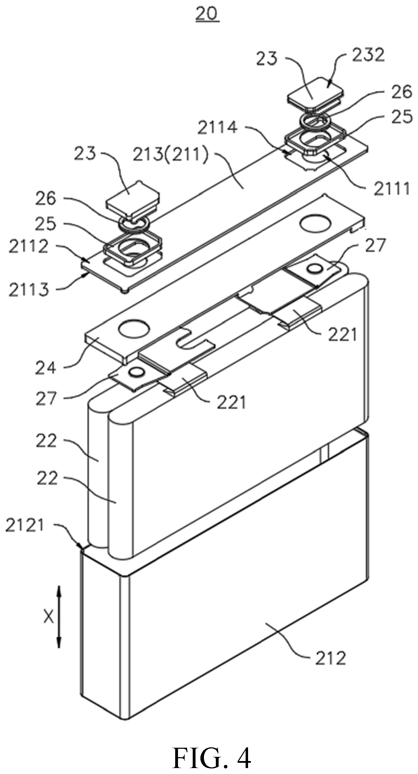

Optionally, the wall portion 211 used for mounting the electrode terminal 23 may be the end cover 213, or may be one of a plurality of walls of the case 212. For example, in FIG. 3 and FIG. 4, the wall portion 211 is the end cover 213 of the housing 21. Certainly, in other embodiments, Alternatively, the wall portion 211 may be a bottom wall of the case 212 disposed opposite to the end cover 213 in the thickness direction X of the wall portion or a side wall adjacent to and butting against the end cover 213.

When the battery cell 20 is assembled, the electrode assembly 22 may be first placed in the case 212, and the case 212 is filled with an electrolyte. Then, the end cover 213 covers the opening 2121 of the case 212, to close the opening 2121 of the case 212.

The case 212 may be in various shapes, such as a cylinder and a cuboid. The shape of the case 212 may be determined based on a specific shape of the electrode assembly 22. For example, if the electrode assembly 22 is a cylindrical structure, the case 212 is optionally a cylindrical structure, and if the electrode assembly 22 has a cuboid structure, the case 212 is optionally a cuboid structure. Certainly, the end cover 213 may have a variety of structures. For example, the end cover 213 has a plate-like structure, a hollow structure having an open end, or the like. For example, in FIG. 4, the case 212 has a cuboid structure.

It may be understood that the housing 21 is not limited to the foregoing structure, and the housing 21 may alternatively have another structure. For example, the housing 21 includes a case 212 and two end covers 213. The case 212 has a hollow structure having two opposite side openings 2121. One end cover 213 correspondingly covers one opening 2121 of the case 212 and forms a sealing connection, to form a sealed space for accommodating the electrode assembly 22 and the electrolyte.

The electrode assembly 22 is a component that undergoes an electro-chemical reaction in the battery cell 20. The electrode assembly 22 may have a variety of structures. For example, the electrode assembly 22 may have a winding structure formed by winding a positive electrode plate, a spacer, and a negative electrode plate, or may have a stacked structure formed by stacking a positive electrode plate, a spacer, and a negative electrode plate.

For example, the spacer is a separator. A main material of the separator may be selected from at least one of glass fiber, non-woven fabric, polyethylene, polypropylene, and polyvinylidene fluoride.

A tab 221 is formed at one end of the electrode assembly 22 close to the wall portion 211 in the thickness direction X of the wall portion. The tab 221 is configured to input or output a positive or negative electrode of the electrode assembly 22. The tab 221 is configured to connect to the electrode terminal 23, to implement an electrical connection between the electrode assembly 22 and the electrode terminal 23. It should be noted that, the tab 221 of the electrode assembly 22 is a component formed by stacking and connecting regions on the positive electrode plate that are not applied with a positive active material layer or a component formed by stacking and connecting regions on the negative electrode plate that are not applied with a negative active material layer. If the tab 221 is configured to output a positive electrode of the electrode assembly 22, the tab 221 is the component formed by stacking and connecting the regions on the positive electrode plate that are not applied with the positive active material layer. If the tab 221 is configured to output a negative electrode of the electrode assembly 22, the tab 221 is the component formed by stacking and connecting the regions on the negative electrode plate that are not applied with the negative active material layer.

For example, A material of the tab 221 may be copper, aluminum, or the like.

Optionally, there may be one or more electrode assemblies 22 accommodated in the housing 21. For example, in FIG. 4, the housing 21 of the battery cell 20 is provided with two electrode assemblies 22, and the two electrode assemblies 22 are stacked in the thickness direction thereof, that is, the two electrode assemblies 22 are stacked in the thickness direction of the battery cell 20. Certainly, in other embodiments, there may be one, three, four, five, six, seven, or eight electrode assemblies 22 accommodated in the housing 21.

The electrode terminal 23 plays a role in outputting or inputting electric energy of the battery cell 20. One end of the electrode terminal 23 is configured to connect to the tab 221 of the electrode assembly 22, and the other end is configured to connect to the busbar component 30, to implement input or output of the electric energy of the battery cell 20.

For example, there may be a plurality of materials for the electrode terminal 23. For example, the material of the electrode terminal 23 may be copper, iron, aluminum, steel, or aluminum alloy. Certainly, in some embodiments, the electrode terminal 23 may alternatively be made of a composite material, that is, the electrode terminal 23 is formed through composite connection of two different metal materials, for example, hot pressing or cold pressing.

For example, the busbar component 30 may alternatively be made of various materials, such as copper, iron, aluminum, steel, or an aluminum alloy.

The electrode terminal 23 is riveted on the wall portion 211, that is, the electrode terminal 23 is assembled to the wall portion 211 through a riveting process. With reference to FIG. 4 and FIG. 5, the wall portion 211 is provided with a mounting hole 2111. The mounting hole 2111 extends through two sides of the wall portion 211 in the thickness direction X of the wall portion. Part of the electrode terminal 23 is threaded through the mounting hole 2111, to rivet the electrode terminal 23 to the wall portion 211, and each of two ends of the electrode terminal 23 extends out of the mounting hole 2111, so that the electrode terminal 23 can connect the electrode assembly 22 located inside the housing 21 and the busbar component 30 located outside the housing 21, to implement input or output of electric energy of the battery cell 20.

The electrode terminal 23 is insulated from and mounted on the wall portion 211, that is, no electrical connection is formed between the electrode terminal 23 and the wall portion 211. In some embodiments, with reference to FIG. 4 and FIG. 5, the battery cell 20 may further include a first insulated member 24 and a second insulated member 25. The first insulated member 24 is located on a side of the wall portion 211 facing the electrode assembly 22, and at least a part of the first insulated member 24 is located between the wall portion 211 and the electrode terminal 23 to insulate and isolate the wall portion 211 from the electrode terminal 23. The second insulated member 25 is located on a side of the wall portion 211 facing away from the electrode assembly 22, and at least a part of the second insulated member 25 is located between the wall portion 211 and the electrode terminal 23 to insulate and isolate the wall portion 211 from the electrode terminal 23.

Optionally, there may be a plurality of materials for the first insulated member 24 and the second insulated member 25. For example, a material of the first insulated member 24 and a material of the second insulated member 25 may be rubber, silica gel, plastic, or the like.

In some embodiments, the battery cell 20 may further include a sealing member 26, the sealing member 26 is disposed between the wall portion 211 and the electrode terminal 23, at least a part of the sealing member 26 is located in the mounting hole 2111, and the sealing member 26 is configured to seal a gap between the electrode terminal 23 and a hole wall surface of the mounting hole 2111.

For example, A material of the sealing member 26 may be rubber, silica gel, plastic, or the like.

The electrode terminal 23 has a flanged portion 231. The flanged portion 231 is a structure formed by flanging the electrode terminal 23 when being riveted. That is, a portion of the electrode terminal 23 is riveted and flanged, and the flanged portion is the flanged portion 231.

The flanged portion 231 is formed at one end of the electrode terminal 23 close to the electrode assembly 22 and at a side of the wall portion 211 facing the electrode assembly 22. That is, the electrode terminal 23 is a structure in which riveting and flanging are performed from inside the housing 21, so that the flanged portion 231 is formed at one end of the electrode terminal 23 close to the electrode assembly 22, and the flanged portion 231 can butt against the side of the wall portion 211 facing the electrode assembly 22, thereby riveting the electrode terminal 23 to the wall portion 211. It should be noted that, the flanged portion 231 may directly butt against the wall portion 211, or may indirectly butt against the wall portion 211. For example, in FIG. 5, the flanged portion 231 indirectly butts against the wall portion 211 by using the first insulated member 24. That is, the first insulated member 24 is disposed between the flanged portion 231 and the wall portion 211, so that the flanged portion 231 can be insulated and isolated from the wall portion 211 by using the first insulated member 24.

An end of the electrode terminal 23 that faces away from the electrode assembly 22 forms a continuous connection surface 232. The connection surface 232 is used for connecting to the busbar component 30. That is, an end surface at an end of the electrode terminal 23 that faces away from the electrode assembly 22 is a complete continuous surface that is not provided with a structure such as a groove or a protrusion. The end surface is the connection surface 232, and the end surface is used for connecting to the busbar component 30 of the battery 100, to implement input or output of electric energy of the battery cell 20.

In some embodiments, in FIG. 4 and FIG. 5, the battery cell 20 may further include a current collection member 27. The current collection member 27 is disposed in the housing 21. The current collection member 27 connects the electrode terminal 23 and the tab 221 of the electrode assembly 22, to implement an electrical connection between the electrode assembly 22 and the electrode terminal 23.

For example, the current collection member 27 is welded to the electrode terminal 23, and is welded to the tab 221. Certainly, in other embodiments, the current collection member 27 may alternatively butt against or adhere to the electrode terminal 23. Similarly, the current collection member 27 may alternatively butt against or adhere to the tab 221.

In FIG. 4, the battery cell 20 includes two electrode terminals 23 and two current collection members 27. Correspondingly, each electrode assembly 22 has two tabs 221, and the two tabs 221 are opposite in polarity. The two electrode terminals 23 are respectively electrically connected to the two tabs 221 of the electrode assembly 22 by using the two current collection members 27, to implement input or output of a positive electrode and a negative electrode of the battery cell 20.

Optionally, the two electrode terminals 23 are both mounted on the wall portion 211, and each electrode terminal 23 is electrically connected to one tab 221 of the electrode assembly 22, to output a positive electrode and a negative electrode of the battery cell 20. Certainly, in other embodiments, Alternatively, the two electrode terminals 23 may be mounted on different walls of the housing 21.

In some embodiments, the battery cell 20 may further include a pressure relief mechanism. The pressure relief mechanism is disposed on the housing 21. The pressure relief mechanism is configured, when internal pressure or temperature of the battery cell 20 reaches a predetermined value, to release the internal pressure of the battery cell 20.

Optionally, the pressure relief mechanism may be disposed on the end cover 213 of the housing 21, or may be disposed on the case 212 of the housing 21. Similarly, the pressure relief mechanism and the housing 21 may be an integral structure or may be a split structure. If the pressure relief mechanism and the housing 21 are a split structure, the pressure relief mechanism may be connected to the housing 21 in a manner such as welding. Correspondingly, the pressure relief mechanism may be a pressure relief component such as an explosion-proof valve, a rupture disk, a gas valve, a pressure relief valve, or a safety valve. If the pressure relief mechanism and the housing 21 are an integral structure, the pressure relief mechanism is an area on the housing 21 in which a weak structure is formed, for example, an area on the housing 21 provided with a scored groove.

The flanged portion 231 of the electrode terminal 23 is formed at an end of the electrode terminal 23 close to the electrode assembly 22 and located on a side of the wall portion 211 facing the electrode assembly 22, and a connection surface 232 used for connecting to a busbar component 30 is formed at an end of the electrode terminal 23 facing away from the electrode assembly 22, so that the electrode terminal 23 is a structure riveted onto the wall portion 211 from inside the housing 21, and an end of the electrode terminal 23 riveted onto the wall portion 211 at which the flanged portion 231 is formed is used for electrically connecting to the electrode assembly 22. Therefore, there is no need to perform riveting on an end of the electrode terminal 23 that is configured to connect to the busbar component 30 and form a groove structure, and there is no need to connect a cover plate configured to block the groove structure to the electrode terminal 23, so that the busbar component 30 can be directly connected to a continuous connection surface 232 at an end of the electrode terminal 23 that faces away from the electrode assembly 22, to reduce interference impact of a welding mark formed through welding between the cover plate and the electrode terminal 23 on the busbar component 30, and help increase a connection area between the busbar component 30 and the electrode terminal 23. Therefore, connection stability and connection reliability between the electrode terminal 23 and the busbar component 30 can be effectively improved, to reduce a risk that a connection failure occurs between the electrode terminal 23 of the battery cell 20 and the busbar component 30 during use, thereby helping improve use stability and service life of a battery 100 having such a battery cell 20.

According to some embodiments of the present application, with reference to FIG. 5, FIG. 6, and FIG. 7, the connection surface 232 is a plane.

The connection surface 232 is a continuous plane. That is, the connection surface 232 is a complete and continuous plane, and no protrusion, groove structure, or the like is disposed on the connection surface 232.

For example, the connection surface 232 is perpendicular to the thickness direction X of the wall portion.

The connection surface 232 of the electrode terminal 23 for connecting to the busbar component 30 is set as a planar structure, so that mutual connection between the electrode terminal 23 and the busbar component 30 is facilitated, and connection quality between the electrode terminal 23 and the busbar component 30 is improved.

According to some embodiments of the present application, Referring to FIG. 5, in the thickness direction X of the wall portion, the wall portion 211 is provided with a first surface 2112 facing away from the electrode assembly 22, and the connection surface 232 is farther from the electrode assembly 22 than the first surface 2112.

The first surface 2112 is a surface of a side of the wall portion 211 facing away from the electrode assembly 22. That is, the first surface 2112 is an outer surface of a side of the wall portion 211 facing away from inside the housing 21.

The connection surface 232 is farther away from the electrode assembly 22 than the first surface 2112. That is, the first surface 2112 is located between the connection surface 232 and the electrode assembly 22 in the thickness direction X of the wall portion, so that the electrode terminal 23 is a structure that projects out of the side of the wall portion 211 facing away from the electrode assembly 22 in the thickness direction X of the wall portion.

The connection surface 232 of the electrode terminal 23 that is used to connect to the busbar component 30 is set to be farther away from the electrode assembly 22 than the first surface 2112 of the wall portion 211 that faces away from the electrode assembly 22, so that the electrode terminal 23 is a structure that projects out of the first surface 2112 in the thickness direction X of the wall portion. Therefore, in an aspect, it is convenient for the busbar component 30 to be connected to the connection surface 232 of the electrode terminal 23, which helps reduce assembly difficulty of mutual connection between the busbar component 30 and the electrode terminal 23; in another aspect, the size of the region corresponding to the connection surface 232 of the electrode terminal 23 can be made to be thick, to improve the structural strength of the electrode terminal 23, thereby helping improve the connection strength and connection stability between the electrode terminal 23 and the busbar component 30.

According to some embodiments of the present application, with reference to FIG. 5, FIG. 6, and FIG. 7, in the thickness direction X of the wall portion, a riveting groove 233 is formed at an end of the electrode terminal 23 that faces the electrode assembly 22, the flanged portion 231 is disposed around the riveting groove 233, and a projection of the riveting groove 233 is located in the connection surface 232.

The flanged portion 231 is disposed around the riveting groove 233. That is, the riveting groove 233 is a structure formed by performing riveting on the electrode terminal 23 from one end that faces the electrode assembly 22, so that the riveting groove 233 is formed at one end of the electrode terminal 23 that faces the electrode assembly 22, and the flanged portion 231 surrounding an outer side of the riveting groove 233 is correspondingly formed, thereby riveting the electrode terminal 23 to the wall portion 211.

A projection of the riveting groove 233 is located in the connection surface 232, that is, in the thickness direction X of the wall portion, the riveting groove 233 is a structure that is entirely covered by the connection surface 232.

The riveting groove 233 is formed on an end of the electrode terminal 23 that faces the electrode assembly 22 in the thickness direction X of the wall portion, and the flanged portion 231 is a structure surrounding an outer side of the riveting groove 233, so that it is convenient to perform riveting from the end of the electrode terminal 23 that faces the electrode assembly 22, to implement flanged riveting of the flanged portion 231 onto the wall portion 211.

According to some embodiments of the present application, Referring to FIG. 5, in the thickness direction X of the wall portion, the wall portion 211 is provided with a first surface 2112 facing away from the electrode assembly 22, and a groove bottom surface of the riveting groove 233 is closer to the electrode assembly 22 than the first surface 2112.

The first surface 2112 is a surface of a side of the wall portion 211 facing away from the electrode assembly 22. That is, the first surface 2112 is an outer surface of a side of the wall portion 211 facing away from inside the housing 21.

The groove bottom surface of the riveting groove 233 is closer to the electrode assembly 22 than the first surface 2112. That is, in the thickness direction X of the wall portion, the groove bottom surface of the riveting groove 233 is located between the first surface 2112 and the electrode assembly 22.

The groove bottom surface of the riveting groove 233 is set to be closer to the electrode assembly 22 than the first surface 2112 of the wall portion 211 facing away from the electrode assembly 22, so that the thickness of a region between the groove bottom surface of the riveting groove 233 and the connection surface 232 can be increased, which helps improve structural strength of the electrode terminal 23, thereby improving connection strength and connection stability between the electrode terminal 23 and the busbar component 30.

In some embodiments, still referring to FIG. 5, in the thickness direction X of the wall portion, the wall portion 211 is provided with a second surface 2113 facing the electrode assembly 22, and the groove bottom surface of the riveting groove 233 is closer to the electrode assembly 22 than the second surface 2113.

The second surface 2113 is a surface of a side of the wall portion 211 facing the electrode assembly 22. That is, the second surface 2113 is an inner surface of a side of the wall portion 211 facing the inside of the housing 21.

The groove bottom surface of the riveting groove 233 is closer to the electrode assembly 22 than the second surface 2113. That is, in the thickness direction X of the wall portion, the groove bottom surface of the riveting groove 233 is located between the second surface 2113 and the electrode assembly 22.

The groove bottom surface of the riveting groove 233 is set to be closer to the electrode assembly 22 than the second surface 2113 of the wall portion 211 facing the electrode assembly 22, so that the thickness of a region between the groove bottom surface of the riveting groove 233 and the connection surface 232 can be further increased, which helps further improve structural strength of the electrode terminal 23, thereby further improving connection strength and connection stability between the electrode terminal 23 and the busbar component 30.

According to some embodiments of the present application, with reference to FIG. 4 and FIG. 5, the battery cell 20 may further include a current collection member 27. The current collection member 27 is disposed between the wall portion 211 and the electrode assembly 22, where the current collection member 27 connects the electrode assembly 22 and the electrode terminal 23, to electrically connect the electrode assembly 22 and the electrode terminal 23.

The current collection member 27 plays a role in connecting the electrode terminal 23 and the tab 221 of the electrode assembly 22, to implement an electrical connection between the electrode assembly 22 and the electrode terminal 23. The current collection member 27 may be made of various materials, such as copper, iron, aluminum, steel, or an aluminum alloy.

Optionally, the current collection member 27 and the electrode terminal 23 may be welded to each other, or may butt against each other. Similarly, the current collection member 27 and the tab 221 of the electrode assembly 22 may be welded to each other, or may butt against each other.

Optionally, in FIG. 4, there are two electrode terminals 23 and two current collection members 27, and each electrode terminal 23 is connected to the electrode assembly 22 by using one current collection member 27, to output a positive electrode and a negative electrode of the battery cell 20.

The battery cell 20 is further provided with a current collection member 27. The current collection member 27 connects the electrode terminal 23 and the electrode assembly 22, to implement an electrical connection between the electrode assembly 22 and the electrode terminal 23, thereby helping reduce the connection difficulty between the electrode assembly 22 and the electrode terminal 23.

According to some embodiments of the present application, with reference to FIG. 5, FIG. 6, and FIG. 7, at least a part of the current collection member 27 is accommodated in the riveting groove 233 and is connected to the groove bottom surface of the riveting groove 233.

At least a part of the current collection member 27 is accommodated in the riveting groove 233 and is connected to the groove bottom surface of the riveting groove 233. That is, the current collection member 27 may be completely accommodated in the riveting groove 233, or may be partially accommodated in the riveting groove 233. In FIG. 5 and FIG. 6, a part of the current collection member 27 is accommodated in the riveting groove 233 and is connected to a groove bottom surface of the riveting groove 233. That is, the current collection member 27 has a part inserted in the riveting groove 233, and the part of the current collection member 27 inserted in the riveting groove 233 is connected to the groove bottom surface of the riveting groove 233, so that the current collection member 27 is connected to the electrode terminal 23.

For example, the part of the current collection member 27 accommodated in the riveting groove 233 is welded to the groove bottom surface of the riveting groove 233, that is, the part of the current collection member 27 accommodated in the riveting groove 233 is welded to a groove bottom wall of the riveting groove 233. Certainly, in other embodiments, alternatively, the part of the current collection member 27 accommodated in the riveting groove 233 may butt against the groove bottom surface of the riveting groove 233 or be welded to a groove side surface of the riveting groove 233.

At least a part of the current collection member 27 is configured to be accommodated in the riveting groove 233 and be connected to the groove bottom surface of the riveting groove 233, so that the current collection member 27 is a structure at least a part of which is inserted in the riveting groove 233. Therefore, by using this structure, the current collection member 27 can be positioned to some extent, which helps improve assembly precision between the current collection member 27 and the electrode terminal 23, and can reduce connection difficulty between the current collection member 27 and the electrode terminal 23.

According to some embodiments of the present application, with reference to FIG. 4 and FIG. 5, the wall portion 211 is provided with a mounting hole 2111, and the mounting hole 2111 extends through the wall portion 211 in the thickness direction X of the wall portion. The battery cell 20 may further include a sealing member 26, the sealing member 26 is disposed between the wall portion 211 and the electrode terminal 23, at least a part of the sealing member 26 is located in the mounting hole 2111, to seal a gap between the electrode terminal 23 and a hole wall surface of the mounting hole 2111, and the sealing member 26 butts against a side of the flanged portion 231 that faces away from the electrode assembly 22 in the thickness direction X of the wall portion. The current collection member 27 is welded to the groove bottom surface of the riveting groove 233.

The mounting hole 2111 extends through the wall portion 211 in the thickness direction X of the wall portion, that is, the mounting hole 2111 is a structure extending in the thickness direction X of the wall portion, and two ends of the mounting hole 2111 in the thickness direction X of the wall portion extend through the first surface 2112 and the second surface 2113 of the wall portion 211 respectively.

The sealing member 26 is disposed between the wall portion 211 and the electrode terminal 23. The sealing member 26 plays a role in sealing a gap between the electrode terminal 23 and the hole wall surface of the mounting hole 2111. There may be a plurality of materials for the sealing member 26. For example, the material of the sealing member 26 may be rubber, silica gel, plastic, or the like.

The current collection member 27 is welded to the groove bottom surface of the riveting groove 233, that is, the part of the current collection member 27 accommodated in the riveting groove 233 is welded to a groove bottom wall of the riveting groove 233. For example, the current collection member 27 and the groove bottom surface of the riveting groove 233 may be welded to each other through a welding process such as laser welding or ultrasonic welding.

The current collection member 27 is set as a structure welded to the groove bottom surface of the riveting groove 233, to improve connection strength and connection stability between the current collection member 27 and the electrode terminal 23. In addition, by using the structure in which at least a part of the current collection member 27 is inserted into the riveting groove 233 and welded to the groove bottom surface of the riveting groove 233, a region in which the current collection member 27 and the electrode terminal 23 are welded to each other can be made to be far away from the sealing member 26, thereby effectively reducing impact on the sealing member 26 when the current collection member 27 and the electrode terminal 23 are welded to each other, helping relieve a phenomenon of burnout of the sealing member 26, and further effectively improving a sealing effect of the sealing member 26 on the electrode terminal 23 and the hole wall surface of the mounting hole 2111.

According to some embodiments of the present application, with reference to FIG. 5 and FIG. 6, the current collection member 27 may include a base portion 271 and a first convex portion 272. The base portion 271 is disposed between the electrode assembly 22 and the wall portion 211 in the thickness direction X of the wall portion, where the base portion 271 is connected to the electrode assembly 22. In the thickness direction X of the wall portion, the first convex portion 272 is disposed on a side of the base portion 271 facing away from the electrode assembly 22, where the first convex portion 272 is inserted into the riveting groove 233 and connected to the groove bottom surface of the riveting groove 233.

The base portion 271 of the current collection member 27 is a sheet-shaped structure, and is disposed between the electrode assembly 22 and the wall portion 211 in the thickness direction X of the wall portion, to play a role in connecting to the tab 221 of the electrode assembly 22, thereby implementing an electrical connection between the current collection member 27 and the electrode assembly 22.

A part of the first insulated member 24 is disposed between the wall portion 211 and the base portion 271 of the current collection member 27 in the thickness direction X of the wall portion, to insulate and isolate the wall portion 211 from the base portion 271 of the current collection member 27, thereby helping reduce a risk of short-circuiting between the wall portion 211 and the base portion 271 of the current collection member 27.

In the thickness direction X of the wall portion, the first convex portion 272 is convexly disposed on a side of the base portion 271 facing away from the electrode assembly 22, that is, the first convex portion 272 is a structure that projects from the side of the base portion 271 facing away from the electrode assembly 22 to a direction away from the electrode assembly 22.

The first convex portion 272 is inserted in the riveting groove 233 and is connected to a groove bottom surface of the riveting groove 233. That is, in the thickness direction X of the wall portions, a part of the first convex portion 272 is inserted in the riveting groove 233, and one end of the first convex portion 272 facing away from the electrode assembly 22 is connected to the groove bottom surface of the riveting groove 233, so that the first convex portion 272 is connected to the electrode terminal 23. For example, the first convex portion 272 is welded to the groove bottom surface of the riveting groove 233, that is, the first convex portion 272 and the groove bottom wall of the riveting groove 233 are welded to each other.

The current collection member 27 is provided with a base portion 271 and a first convex portion 272 that is convexly disposed on a side of the base portion 271 facing away from the electrode assembly 22, and the first convex portion 272 is inserted in the riveting groove 233 and is connected to a groove bottom surface of the riveting groove 233, so that at least a part of the current collection member 27 is accommodated in the riveting groove 233 and is assembled and connected to the electrode terminal 23. By using the current collection member 27 of such a structure, on the one hand, the current collection member 27 is conveniently connected to the electrode terminal 23, helping reduce assembly difficulty between the current collection member 27 and the electrode terminal 23, and in another aspect, through a structure in which the first convex portion 272 is inserted in the first groove 273, a certain guiding and limiting function can be implemented in a mutual assembly process of the current collection member 27 and the electrode terminal 23, helping improve assembly efficiency and assembly quality between the current collection member 27 and the electrode terminal 23.

According to some embodiments of the present application, with reference to FIG. 5, FIG. 6, and FIG. 7, in the thickness direction X of the wall portion, the flanged portion 231 is provided with a third surface 2311 facing the electrode assembly 22, the riveting groove 233 is sunk from the third surface 2311 to a direction away from the electrode assembly 22, and the third surface 2311 butts against the base portion 271.

The third surface 2311 is a surface of the side of the flanged portion 231 facing the electrode assembly 22 in the thickness direction X of the wall portion, and the riveting groove 233 is sunk from the third surface 2311 to a direction away from the electrode assembly 22. That is, the riveting groove 233 is disposed on the third surface 2311 of the flanged portion 231. That is, in the thickness direction X of the wall portion, the riveting groove 233 is sunk from the third surface 2311 of the flanged portion 231 to a direction away from the electrode assembly 22 and extends into the electrode terminal 23.

The third surface 2311 butts against the base portion 271, that is, the base portion 271 of the current collection member 27 butts against a side of the flanged portion 231 facing the electrode assembly 22 in the thickness direction X of the wall portion.

The riveting groove 233 of the electrode terminal 23 is disposed on the third surface 2311 of the flanged portion 231 facing the electrode assembly 22, and the third surface 2311 butts against the base portion 271 of the current collection member 27 in the thickness direction X of the wall portion, so that the first convex portion 272 of the current collection member 27 is conveniently inserted into the riveting groove 233, and a contact area between the current collection member 27 and the electrode terminal 23 is further improved, to improve an overcurrent effect between the current collection member 27 and the electrode terminal 23.

According to some embodiments of the present application, with reference to FIG. 5 and FIG. 6, in the thickness direction X of the wall portion, a first groove 273 is formed on a side of the current collection member 27 facing the electrode assembly 22 and at a position corresponding to the first convex portion 272.

For example, the first convex portion 272 of the current collection member 27 is a structure formed through a stamping process, so that the first convex portion 272 is formed on the side of the current collection member 27 facing away from the electrode assembly 22, and the first groove 273 is formed on the side of the current collection member 27 facing the electrode assembly 22 and at a position corresponding to the first convex portion 272. Certainly, the process of forming the first convex portion 272 of the current collection member 27 is not merely limited thereto. In another embodiment, the first convex portion 272 of the current collection member 27 may alternatively be formed by a machining process such as casting or milling.

It should be noted that, the first convex portion 272 is welded to a groove bottom surface of the riveting groove 233, and a part of a welding mark formed through welding between the first convex portion 272 and the groove bottom surface of the riveting groove 233 is formed on a groove bottom surface of the first groove 273. That is, the welding mark formed through the welding between the first convex portion 272 and the groove bottom surface of the riveting groove 233 extends into the first groove 273, so that the welding between the current collection member 27 and the electrode terminal 23 is a structure in which the welding is performed from a side of the current collection member 27 provided with the first groove 273.

The first groove 273 is formed on the side of the current collection member 27 facing the electrode assembly 22 and in the region corresponding to the first convex portion 272, so that the current collection member 27 is a structure that can be formed through stamping, and the first convex portion 272 and the first groove 273 are respectively formed on two sides of the current collection member 27, thereby helping reduce manufacturing difficulty of the current collection member 27.

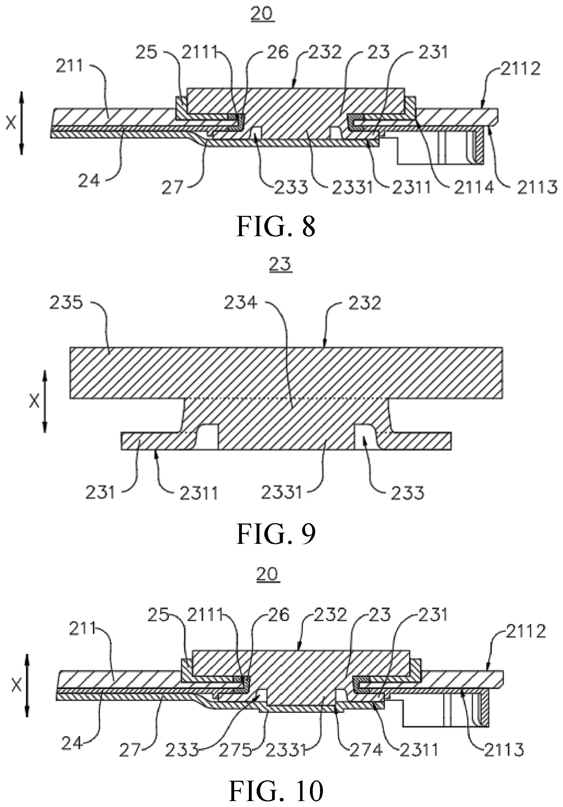

According to some embodiments of the present application, with reference to FIG. 8 and FIG. 9, FIG. 8 is a partial cross-sectional view of a battery cell 20 according to some other embodiments of the present application, and FIG. 9 is a cross-sectional view of an electrode terminal 23 of a battery cell 20 according to some other embodiments of the present application. The groove bottom surface of the riveting groove 233 is convexly provided with a connection portion 2331, and the connection portion 2331 is connected to the current collection member 27.

The groove bottom surface of the riveting groove 233 is convexly provided with the connection portion 2331. That is, the connection portion 2331 is connected to the groove bottom surface of the riveting groove 233, so that the electrode terminal 23 is a structure connected to the current collection member 27 by using the connection portion 2331.

For example, in FIG. 9, the electrode terminal 23 and the connection portion 2331 are an integrally formed structure, and the electrode terminal 23 may be formed by an integral forming process such as casting or stamping. Certainly, in other embodiments, Alternatively, the electrode terminal 23 and the connection portion 2331 may be a split structure. For example, the connection portion 2331 may be connected to the groove bottom surface of the riveting groove 233 through a structure such as welding or snap-fit.

The connection portion 2331 is convexly disposed on the groove bottom surface of the riveting groove 233, so that the current collection member 27 is a structure connected to the connection portion 2331 to electrically connect the current collection member 27 and the electrode terminal 23. The current collection member 27 adopting this structure has a simple structure, thereby facilitating assembly. In addition, there is no need to dispose a protrusion structure inserted in the riveting groove 233 on the current collection member 27, thereby helping reduce machining difficulty of the current collection member 27.

According to some embodiments of the present application, Referring to FIG. 8, the wall portion 211 is provided with a mounting hole 2111, and the mounting hole 2111 extends through the wall portion 211 in the thickness direction X of the wall portion. The battery cell 20 may further include a sealing member 26, the sealing member 26 is disposed between the wall portion 211 and the electrode terminal 23, at least a part of the sealing member 26 is located in the mounting hole 2111, to seal a gap between the electrode terminal 23 and a hole wall surface of the mounting hole 2111, and the sealing member 26 butts against a side of the flanged portion 231 that faces away from the electrode assembly 22 in the thickness direction X of the wall portion. The current collection member 27 is welded to the connection portion 2331.

The mounting hole 2111 extends through the wall portion 211 in the thickness direction X of the wall portion, that is, the mounting hole 2111 is a structure extending in the thickness direction X of the wall portion, and two ends of the mounting hole 2111 in the thickness direction X of the wall portion extend through the first surface 2112 and the second surface 2113 of the wall portion 211 respectively.

The sealing member 26 is disposed between the wall portion 211 and the electrode terminal 23. The sealing member 26 plays a role in sealing a gap between the electrode terminal 23 and the hole wall surface of the mounting hole 2111. There may be a plurality of materials for the sealing member 26. For example, the material of the sealing member 26 may be rubber, silica gel, plastic, or the like.

The current collection member 27 is welded to the connection portion 2331. That is, the current collection member 27 is a structure welded to the connection portion 2331 that is convexly provided on the groove bottom surface of the riveting groove 233, to electrically connect the current collection member 27 to the electrode terminal 23. For example, the current collection member 27 and the connection portion 2331 may be welded to each other through a welding process such as laser welding or ultrasonic welding.

It should be noted that, the welding mark formed through welding between the current collection member 27 and the connection portion 2331 extends to the side of the current collection member 27 facing the electrode assembly 22, so that the welding between the current collection member 27 and the connection portion 2331 is a structure in which the welding is performed from the side of the current collection member 27 facing the electrode assembly 22.

The current collection member 27 is set as a structure welded to the connection portion 2331, to improve connection strength and connection stability between the current collection member 27 and the electrode terminal 23. In addition, by using the structure in which the current collection member 27 is welded to the connection portion 2331 that is convexly disposed on the groove bottom surface of the riveting groove 233, a region in which the current collection member 27 and the electrode terminal 23 are welded to each other can be made to be far away from the sealing member 26, thereby effectively reducing impact on the sealing member 26 when the current collection member 27 and the electrode terminal 23 are welded to each other, helping relieve a phenomenon of burnout of the sealing member 26, and further effectively improving a sealing effect of the sealing member 26 on the electrode terminal 23 and the hole wall surface of the mounting hole 2111.

According to some embodiments of the present application, with reference to FIG. 8 and FIG. 9, in the thickness direction X of the wall portion, the flanged portion 231 is provided with a third surface 2311 facing the electrode assembly 22, the riveting groove 233 is sunk from the third surface 2311 to a direction away from the electrode assembly 22, and an end surface at an end of the connection portion 2331 facing the electrode assembly 22 is flush with the third surface 2311.

The third surface 2311 is a surface of the side of the flanged portion 231 facing the electrode assembly 22 in the thickness direction X of the wall portion, and the riveting groove 233 is sunk from the third surface 2311 to a direction away from the electrode assembly 22. That is, the riveting groove 233 is disposed on the third surface 2311 of the flanged portion 231 facing the electrode assembly 22.

An end surface at an end of the connection portion 2331 that faces the electrode assembly 22 is flush with the third surface 2311, that is, the end of the connection portion 2331 that faces the electrode assembly 22 is flush with a side of the flanged portion 231 that faces the electrode assembly 22. That is, a dimension of the connection portion 2331 in the thickness direction X of the wall portion is equal to a groove depth of the riveting groove 233 in the thickness direction X of the wall portion, so that when the current collection member 27 is connected to the connection portion 2331, the current collection member 27 can further butt against the third surface 2311.

The end surface at the end of the connection portion 2331 that faces the electrode assembly 22 is set to be flush with the third surface 2311 of the flanged portion 231 provided with the riveting groove 233, so that a dimension of the connection portion 2331 in the thickness direction X of the wall portion is equal to a groove depth of the riveting groove 233, thereby making it convenient to set a side of the current collection member 27 that faces the connection portion 2331 as a planar structure. In an aspect, machining difficulty of the current collection member 27 can be reduced. In another aspect, mutual butting between the current collection member 27 and the third surface 2311 can be achieved while connection difficulty between the current collection member 27 and the connection portion 2331 is reduced, which helps improve an overcurrent area between the current collection member 27 and the electrode terminal 23.

It should be noted that, the structure of the battery cell 20 is not merely limited thereto. In some embodiments, Referring to FIG. 10, FIG. 10 is a partial cross-sectional view of a battery cell 20 according to still some other embodiments of the present application. In the thickness direction X of the wall portion, the flanged portion 231 is provided with a third surface 2311 facing the electrode assembly 22, the riveting groove 233 is sunk from the third surface 2311 to a direction away from the electrode assembly 22, and the connection portion 2331 projects from the third surface 2311.

The connection portion 2331 projects from the third surface 2311, that is, an end surface at an end of the connection portion 2331 that faces the electrode assembly 22 in the thickness direction X of the wall portion is closer to the electrode assembly 22 than the third surface 2311. That is, the connection portion 2331 extends out of the riveting groove 233 in the thickness direction X of the wall portion.

The connection portion 2331 is configured to project, in the thickness direction X of the wall portion, from the third surface 2311 of the flanged portion 231 provided with the riveting groove 233, so that the end surface at the end of the connection portion 2331 facing the electrode assembly 22 is closer to the electrode assembly 22 than the third surface 2311 of the flanged portion 231 provided with the riveting groove 233. Therefore, mutual connection between the current collection member 27 and the connection portion 2331 is facilitated, which helps reduce a phenomenon of poor connection quality between the current collection member 27 and the connection portion 2331 caused by existence of a gap between the current collection member 27 and the connection portion 2331.

According to some embodiments of the present application, Referring to FIG. 10, in the thickness direction X of the wall portion, a side of the current collection member 27 facing away from the electrode assembly 22 is provided with a second groove 274, and the connection portion 2331 is inserted into the second groove 274 and connected to a groove bottom surface of the second groove 274.

The side of the current collection member 27 facing away from the electrode assembly 22 is provided with the second groove 274, that is, the second groove 274 is formed by sinking a surface on the side of the current collection member 27 that faces away from the electrode assembly 22 in the thickness direction X of the wall portion.

The connection portion 2331 is inserted in the second groove 274 and is connected to the groove bottom surface of the second groove 274. That is, the connection portion 2331 extends into the second groove 274 of the current collection member 27 in the thickness direction X of the wall portion, and one end of the connection portion 2331 that faces the electrode assembly 22 is connected to the groove bottom surface of the second groove 274, to implement an electrical connection between the current collection member 27 and the electrode terminal 23.

The second groove 274 is disposed on the side of the current collection member 27 facing away from the electrode assembly 22, and the connection portion 2331 is inserted in the second groove 274 and connected to the groove bottom surface of the second groove 274. Therefore, by using this structure, the current collection member 27 can be positioned to some extent, which helps improve assembly precision between the current collection member 27 and the electrode terminal 23, and can reduce connection difficulty between the current collection member 27 and the electrode terminal 23.

In some embodiments, still referring to FIG. 10, in the thickness direction X of the wall portion, a second convex portion 275 is formed on a side of the current collection member 27 facing the electrode assembly 22 and at a position corresponding to the second groove 274.

For example, the second groove 274 disposed on the side of the current collection member 27 facing away from the electrode assembly 22 is a structure formed through a stamping process, so that the second groove 274 is formed on the side of the current collection member 27 facing away from the electrode assembly 22, and the second convex portion 275 is formed on the side of the current collection member 27 facing the electrode assembly 22 and at a position corresponding to the second groove 274. Certainly, a machining process of the second groove 274 disposed on the side of the current collection member 27 facing away from the electrode assembly 22 is not merely limited thereto. In another embodiment, the second groove 274 disposed on the side of the current collection member 27 facing away from the electrode assembly 22 may alternatively be formed by a machining process such as casting or milling.

The second convex portion 275 is formed on the side of the current collection member 27 facing the electrode assembly 22 and in the region corresponding to the second groove 274, so that the current collection member 27 is a structure that can be formed through stamping, and the second groove 274 and the second convex portion 275 are respectively formed on two sides of the current collection member 27, thereby helping reduce manufacturing difficulty of the current collection member 27.

According to some embodiments of the present application, Referring to FIG. 10, in the thickness direction X of the wall portion, the flanged portion 231 is provided with a third surface 2311 facing the electrode assembly 22, the riveting groove 233 is sunk from the third surface 2311 to a direction away from the electrode assembly 22, and the third surface 2311 butts against the current collection member 27.

The third surface 2311 is a surface of the side of the flanged portion 231 facing the electrode assembly 22 in the thickness direction X of the wall portion, and the riveting groove 233 is sunk from the third surface 2311 to a direction away from the electrode assembly 22. That is, the riveting groove 233 is disposed on the third surface 2311 of the flanged portion 231.

The third surface 2311 butts against the current collection member 27. That is, after the connection portion 2331 is inserted into the second groove 274 of the current collection member 27 and is connected to the groove bottom surface of the second groove 274, a side of the current collection member 27 facing away from the electrode assembly 22 butts against the third surface 2311 of the flanged portion 231. That is, in the thickness direction X of the wall portion, a dimension by which the connection portion 2331 projects from the third surface 2311 is equal to a groove depth of the second groove 274.

The riveting groove 233 of the electrode terminal 23 is disposed on the third surface 2311 of the flanged portion 231 facing the electrode assembly 22, and the third surface 2311 butts against the current collection member 27 in the thickness direction X of the wall portion, so that a contact area between the current collection member 27 and the electrode terminal 23 is further improved, to improve an overcurrent effect between the current collection member 27 and the electrode terminal 23.

According to some embodiments of the present application, with reference to FIG. 6, FIG. 7, and FIG. 9, the wall portion 211 is provided with a mounting hole 2111, and the mounting hole 2111 extends through the wall portion 211 in the thickness direction X of the wall portion. The electrode terminal 23 may further include a body portion 234 and a limiting portion 235. The body portion 234 is threaded through the mounting hole 2111 in the thickness direction X of the wall portion, where the flanged portion 231 is connected to an end of the body portion 234 close to the electrode assembly 22. The limiting portion 235 is connected to an end of the body portion 234 facing away from the electrode assembly 22, where in the thickness direction X of the wall portion, the connection surface 232 is formed at an end of the limiting portion 235 facing away from the electrode assembly 22, the limiting portion 235 is located on a side of the wall portion 211 facing away from the electrode assembly 22, and the limiting portion 235 and the flanged portion 231 are configured to collaboratively hold the wall portion 211.

The body portion 234 is threaded through the mounting hole 2111 in the thickness direction X of the wall portion. That is, the body portion 234 of the electrode terminal 23 is a structure inserted in the mounting hole 2111 of the wall portion 211, and each of two ends of the body portion 234 in the thickness direction X of the wall portion extends out of the mounting hole 2111.

The flanged portion 231 is connected to one end of the body portion 234 that is close to the electrode assembly 22, and the limiting portion 235 is connected to one end of the body portion 234 that faces away from the electrode assembly 22. That is, the flanged portion 231 and the limiting portion 235 are respectively connected to two ends of the body portion 234. In addition, the flanged portion 231 is located inside the housing 21, and the limiting portion 235 is located outside the housing 21, so that the limiting portion 235, the body portion 234, and the flanged portion 231 of the electrode terminal 23 are structures arranged in sequence in the thickness direction X of the wall portion.

One end of the limiting portion 235 that faces away from the electrode assembly 22 forms the connection surface 232, that is, an end surface at one end of the limiting portion 235 that faces away from the body portion 234 in the thickness direction X of the wall portion is the connection surface 232, so that the electrode terminal 23 is a structure connected to the busbar component 30 by using the limiting portion 235.

The limiting portion 235 and the flanged portion 231 are configured to collaboratively hold the wall portion 211, that is, the limiting portion 235 and the flanged portion 231 are respectively located at two sides of the wall portion 211 in the thickness direction X of the wall portion, and the limiting portion 235 and the flanged portion 231 overlap with a part of the wall portion 211, so that the limiting portion 235 and the flanged portion 231 can collaboratively hold the wall portion 211, to assemble the electrode terminal 23 to the wall portion 211. It should be noted that, the limiting portion 235 and the flanged portion 231 may directly hold the wall portion 211, that is, the limiting portion 235 and the flanged portion 231 directly butt against the wall portion 211. Certainly, the limiting portion 235 and the flanged portion 231 may alternatively indirectly hold the wall portion 211, that is, the limiting portion 235 and the flanged portion 231 may indirectly butt against the wall portion 211 by using another component.

The electrode terminal 23 is a structure riveted to the wall portion 211, that is, the body portion 234, the limiting portion 235, and the flanged portion 231 of the electrode terminal 23 are an integral structure. The electrode terminal 23 is formed with the body portion 234, the limiting portion 235, and the flanged portion 231 after being assembled on the wall portion 211 through a riveting process. The flanged portion 231 is a structure formed after the electrode terminal 23 is riveted and flanged.

It should be noted that, in the embodiment in which the riveting groove 233 is formed at the end of the electrode terminal 23 that faces the electrode assembly 22, and the riveting groove 233 is sunk from the third surface 2311 of the flanged portion 231 to a direction away from the electrode assembly 22, the riveting groove 233 may extend into the body portion 234, or may not extend into the body portion 234. For example, in FIG. 7 and FIG. 9, the riveting groove 233 is sunk from the third surface 2311 of the flanged portion 231 to a direction away from the electrode assembly 22, and the riveting groove 233 extends into the body portion 234.

The electrode terminal 23 is provided with the body portion 234 threaded through the mounting hole 2111, and two ends of the body portion 234 in the thickness direction X of the wall portion are respectively connected to the limiting portion 235 and the flanged portion 231, where the limiting portion 235 and the flanged portion 231 are respectively located on a side of the wall portion 211 facing away from the electrode assembly 22 and a side of the wall portion facing the electrode assembly 22 in the thickness direction X of the wall portion, so that the flanged portion 231 of the electrode terminal 23 can cooperate with the limiting portion 235 to hold the wall portion 211 after being riveted and flanged, and the electrode terminal 23 is riveted and fixed to the wall portion 211 from inside the housing 21. Therefore, a connection surface 232 for connecting to the busbar component 30 is formed on a side of the limiting portion 235 facing away from the electrode assembly 22, to facilitate increase in a connection area between the busbar component 30 and the electrode terminal 23, thereby effectively improving connection stability and connection reliability between the electrode terminal 23 and the busbar component 30.

According to some embodiments of the present application, with reference to FIG. 5, FIG. 8, and FIG. 10, the battery cell 20 may further include a first insulated member 24. In the thickness direction X of the wall portion, at least a part of the first insulated member 24 is located between the flanged portion 231 and the wall portion 211, to insulate and isolate the flanged portion 231 from the wall portion 211.

At least a part of the first insulated member 24 is located between the flanged portion 231 and the wall portion 211. That is, the first insulated member 24 extends to a position between the flanged portion 231 and the wall portion 211, so that the flanged portion 231 and the wall portion 211 are insulated and isolated from each other by using the first insulated member 24.

For example, the first insulated member 24 may be made of various materials, such as rubber, plastic, or silica gel.

The battery cell 20 is further provided with the first insulated member 24, and at least a part of the first insulated member 24 is located between the flanged portion 231 and the wall portion 211, so that the first insulated member 24 can play a role in insulating and isolating the flanged portion 231 from the wall portion 211, thereby reducing a risk of short circuiting between the flanged portion 231 and the wall portion 211 and improving use reliability of the battery cell 20.

According to some embodiments of the present application, still with reference to FIG. 5, FIG. 8, and FIG. 10, the battery cell 20 may further include a second insulated member 25. In the thickness direction X of the wall portion, at least a part of the second insulated member 25 is located between the limiting portion 235 and the wall portion 211, to insulate and isolate the limiting portion 235 from the wall portion 211.

At least a part of the second insulated member 25 is located between the limiting portion 235 and the wall portion 211. That is, the second insulated member 25 extends to a position between the limiting portion 235 and the wall portion 211, so that the limiting portion 235 and the wall portion 211 are insulated and isolated from each other by using the second insulated member 25.

For example, the second insulated member 25 may be made of various materials, such as rubber, plastic, or silica gel.

The battery cell 20 is further provided with the second insulated member 25, and at least a part of the second insulated member 25 is located between the limiting portion 235 and the wall portion 211, so that the second insulated member 25 can play a role in insulating and isolating the limiting portion 235 from the wall portion 211, thereby reducing a risk of short circuiting between the limiting portion 235 and the wall portion 211 and improving use reliability of the battery cell 20.

In some embodiments, with reference to FIG. 4 and FIG. 5, in the thickness direction X of the wall portion, a side of the wall portion 211 that faces away from the electrode assembly 22 is provided with an accommodating groove 2114, the mounting hole 2111 is disposed on a groove bottom surface of the accommodating groove 2114, and at least a part of the second insulated member 25 is accommodated in the accommodating groove 2114.

The accommodating groove 2114 is disposed on the first surface 2112 of the wall portion 211. The accommodating groove 2114 is a structure that is sunk from the first surface 2112 to the direction close to the electrode assembly 22 in the thickness direction X of the wall portion.

For example, A part of the second insulated member 25 is accommodated in the accommodating groove 2114. Certainly, in other embodiments, Alternatively, the whole second insulated member 25 may be located in the accommodating groove 2114.

An accommodating groove 2114 for accommodating the second insulated member 25 is provided on a side of the wall portion 211 facing away from the electrode assembly 22, thereby making it convenient to assemble the second insulated member 25 between the limiting portion 235 and the wall portion 211, which can play a role in assembling and positioning the second insulated member 25, to help reduce assembly difficulty of the second insulated member 25, and can play a role in protecting the second insulated member 25 to some extent, to reduce a phenomenon such as wear or damage that occurs on the second insulated member 25 during use.

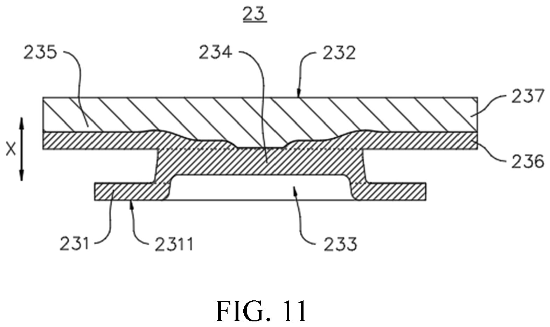

According to some embodiments of the present application, Referring to FIG. 11, FIG. 11 is a cross-sectional view of an electrode terminal 23 of a battery cell 20 according to some embodiments of the present application in another embodiment. The electrode terminal 23 includes a first material layer 236 and a second material layer 237 that are composited with each other, the first material layer 236 and the second material layer 237 are stacked in the thickness direction X of the wall portion, the first material layer 236 is located on a side of the second material layer 237 facing the electrode assembly 22, and the connection surface 232 is formed on a side of the second material layer 237 facing away from the first material layer 236. A material of the first material layer 236 is different from a material of the second material layer 237, the first material layer 236 is used for connecting to a tab 221 of the electrode assembly 22, the material of the first material layer 236 is the same as a material of the tab 221 of the electrode assembly 22, the second material layer 237 is used for connecting to the busbar component 30, and the material of the second material layer 237 is the same as a material of the busbar component 30.

The electrode terminal 23 includes the first material layer 236 and the second material layer 237 that are composited with each other. The material of the first material layer 236 is different from the material of the second material layer 237. That is, the electrode terminal 23 is formed by mutually composited and connecting the first material layer 236 and the second material layer 237 that are made of different materials. Optionally, the first material layer 236 and the second material layer 237 of the electrode terminal 23 may be connected through a composite process such as hot pressing or cold pressing.

The first material layer 236 and the second material layer 237 are stacked in the thickness direction X of the wall portion. That is, the first material layer 236 and the second material layer 237 are structures arranged in the thickness direction X of the wall portion and then composited and connected.

A side of the second material layer 237 facing away from the first material layer 236 forms a connection surface 232. That is, the connection surface 232 is formed on the second material layer 237, so that a surface of the side of the second material layer 237 facing away from the first material layer 236 forms the connection surface 232.

The first material layer 236 is configured to connect to the tab 221 of the electrode assembly 22. A material of the first material layer 236 is the same as a material of the tab 221 of the electrode assembly 22. That is, in the electrode terminal 23, the first material layer 236 and the tab 221 of the electrode assembly 22 are connected to each other, and the material of the first material layer 236 is the same as the material of the tab 221 of the electrode assembly 22, so that a material of a part of the electrode terminal 23 that is configured to be welded to the tab 221 of the electrode assembly 22 is the same as that of the tab. This helps reduce the welding difficulty, and can improve the welding quality.

The second material layer 237 is configured to connect to the busbar component 30. A material of the second material layer 237 is the same as a material of the busbar component 30. That is, in the electrode terminal 23, the second material layer 237 and the busbar component 30 are connected to each other, and the material of the second material layer 237 is the same as the material of the busbar component 30, so that a material of a part of the electrode terminal 23 that is configured to be welded to the busbar component 30 is the same as that of the busbar component. This helps reduce the welding difficulty, and can improve the welding quality.

It should be noted that, That the material of the first material layer 236 is the same as the material of the tab 221 of the electrode assembly 22 means that a main composition of the first material layer 236 is the same as a main composition of the tab 221 of the electrode assembly 22. For example, if the first material layer 236 and the tab 221 of the electrode assembly 22 are each made of a single material, such as copper or aluminum, the first material layer 236 and the tab 221 of the electrode assembly 22 are each formed by a same metal element. If the first material layer 236 and the tab 221 of the electrode assembly 22 are made of an alloy material or a mixed material, for example, an aluminum alloy or steel, That the material of the first material layer 236 is the same as the material of the tab 221 of the electrode assembly 22 means that a main composition of the first material layer 236 is the same as a main composition of the tab 221 of the electrode assembly 22. If the first material layer 236 and the tab 221 of the electrode assembly 22 are different only in composition contents, the first material layer and the tab are also made of a same material. Similarly, That the material of the second material layer 237 is the same as the material of the busbar component 30 means that a main composition of the second material layer 237 is the same as a main composition of the busbar component 30. For example, if the second material layer 237 and the busbar component 30 are each made of a single material, such as copper or aluminum, the second material layer 237 and the busbar component 30 are each formed by a same metal element. If the second material layer 237 and the busbar component 30 are made of an alloy material or a mixed material, for example, an aluminum alloy or steel, That the material of the second material layer 237 is the same as the material of the busbar component 30 means that a main composition of the second material layer 237 is the same as a main composition of the busbar component 30. If the second material layer 237 and the busbar component 30 are different only in composition contents, the second material layer and the busbar component are also made of a same material.

For example, in FIG. 11, the electrode terminal 23 includes a body portion 234 and a limiting portion 235 and a flanged portion 231 that are connected to two ends of the body portion 234. A connection interface between the first material layer 236 and the second material layer 237 is located in the limiting portion 235. Certainly, the structure of the electrode terminal 23 is not merely limited thereto. In another embodiment, A connection interface between the first material layer 236 and the second material layer 237 may alternatively be located in the body portion 234 or in the flanged portion 231.

The electrode terminal 23 is set to be formed by the first material layer 236 and the second material layer 237 that are stacked and composited and connected to each other in the thickness direction X of the wall portion, where a material of the first material layer 236 is the same as a material of the tab 221 of the electrode assembly 22, and a material of the second material layer 237 is the same as a material of the busbar component 30, so that the electrode terminal 23 can connect the busbar component 30 and the tab 221 of the electrode assembly 22 that are made of different materials. Therefore, by using the electrode terminal 23 of this structure, a connection between the tab 221 of the electrode assembly 22 and the busbar component 30 that are made of different materials can be implemented, which helps improve an overcurrent effect, and can alleviate a quality problem caused by mutual assembly and connection between different materials.

According to some embodiments of the present application, with reference to FIG. 3 and FIG. 4, the housing 21 may include a case 212 and an end cover 213. An accommodating cavity having an opening 2121 is formed inside the case 212. The accommodating cavity is configured to accommodate the electrode assembly 22. The end cover 213 closes the opening 2121. The end cover 213 is the wall portion 211.

The end cover 213 is the wall portion 211. To be specific, the electrode terminal 23 is riveted to the end cover 213.

The wall portion 211 of the housing 21 is set as an end cover 213 of the housing 21 used for closing the opening 2121 of the case 212. By using the battery cell 20 of this structure, assembly of the electrode terminal 23 on the end cover 213 is facilitated, and mutual assembly and connection between the electrode terminal 23 and the electrode assembly 22 are facilitated, which helps reduce assembly difficulty of the battery cell 20, to improve production efficiency of the battery cell 20.

It should be noted that, the structure of the battery cell 20 is not limited thereto. In some embodiments, the battery cell 20 may alternatively be another structure. For example, the housing 21 may include a case 212 and an end cover 213. The case 212 includes a side wall and the wall portion 211 that are integrally formed. The side wall is disposed around the wall portion 211. One end of the side wall is connected to the wall portion 211 and the other end of the side wall is closed to form an opening 2121 in the thickness direction X of the wall portion. The side wall and the wall portion 211 jointly define an accommodating cavity for accommodating the electrode assembly 22. The end cover 213 closes the opening 2121. To be specific, the wall portion 211 is a bottom wall of the case 212 opposite to the end cover 213 in the thickness direction X of the wall portion. To be further specific, the electrode terminal 23 is riveted to the bottom wall of the case 212.

The case 212 includes the side wall and the wall portion 211 that are integrally formed. To be specific, the case 212 is manufactured by using an integral forming process, for example, stamping, casting, or extrusion molding. To be further specific, the side wall and the wall portion 211 of the case 212 have an integral structure.

The wall portion 211 of the housing 21 is set as a wall of the case 212 that is disposed opposite to the end cover 213 in the thickness direction X of the wall portion, the battery cell 20 using this structure enables a region of the housing 21 in which the electrode terminal 23 is mounted to be away from the end cover 213, and there is no direct connection relationship between the wall portion 211 and the end cover 213, so that a phenomenon that a force that is generated when a component such as the electrode terminal 23 pulls or twists the wall portion 211 acts on the end cover 213 can be relieved, to reduce a risk that a connection between the end cover 213 and the case 212 fails, thereby helping reduce a risk that liquid leakage occurs during use of the battery cell 20.

According to some embodiments of the present application, the present application further provides a battery 100. The battery 100 includes a battery cell 20 according to any one of the foregoing solutions.

Referring to FIG. 2, the battery 100 may further include a box 10, where the battery cell 20 is accommodated in the box 10.

In some embodiments, the box 10 may include a first box body 11 and a second box body 12, the first box body 11 and the second box body 12 cover each other, and the first box body 11 and the second box body 12 jointly define the assembly space for accommodating the battery cells 20.

Optionally, the second box body 12 may be a hollow structure being open on one side, the first box body 11 may be a plate-like structure, and the first box body 11 covers an open side of the second box body 12, so that the first box body 11 and the second box body 12 jointly define the assembly space. Alternatively, each of the first box body 11 and the second box body 12 may be a hollow structure being open on one side, and an open side of the first box body 11 covers an open side of the second box body 12.

Certainly, the box 10 formed by the first box body 11 and the second box body 12 may be in various shapes, such as a cylinder or a cuboid. For example, in FIG. 2, the box 10 has a cuboid structure.

Optionally, there may be one or more battery cells 20 disposed in the box 10. For example, in FIG. 2, a plurality of battery cells 20 is disposed in the box 10 of the battery 100, and the plurality of battery cells 20 may be connected in series, parallel, or series-parallel. The series-parallel connection means that both series connection and parallel connection exist among the plurality of battery cells 20. The plurality of battery cells 20 may be directly connected in series, parallel, or series-parallel together, and then a whole formed by the plurality of battery cells 20 may be accommodated in the box body 10. Certainly, the battery 100 may alternatively be in the form of a plurality of battery modules formed by the plurality of battery cells 20 that are first connected in series, parallel, or series-parallel, and the plurality of battery modules are then connected in series, parallel, or series-parallel to form a whole and accommodated in the box body 10.

The battery 100 may further include other structures, for example, the battery 100 may also include a busbar component 30. The busbar component 30 connects a plurality of battery cells 20, to achieve electrical connection between the plurality of battery cells 20.

It should be noted that, in some embodiments, Alternatively, the battery 100 may not be provided with a box 10. The battery 100 includes a plurality of battery cells 20, and the battery 100 including the plurality of battery cells 20 may be directly assembled to a power consuming apparatus, to supply electric energy to the power consuming apparatus by using the plurality of battery cells 20. That is, the box 10 may be used as a part of the power consuming apparatus. An example of the power consuming apparatus is a vehicle 1000. The box 10 may be used as a part of a chassis structure of the vehicle 1000. For example, a part of the box 10 may become at least a part of a floor of the vehicle 1000, or a part of the box 10 may become at least a part of a cross beam and a longitudinal beam of the vehicle 1000.

According to some embodiments of the present application, the present application further provides a power consuming apparatus. The power consuming apparatus includes a battery cell 20 according to any one of the foregoing solutions, and the battery cell 20 is configured to supply electric energy to the power consuming apparatus.

The power consuming apparatus may be any one of the foregoing devices or systems to which the battery cell 20 is applied.

According to some embodiments of the present application, with reference to FIG. 3 to FIG. 7, the present application provides a battery cell 20. The battery cell 20 includes a housing 21, an electrode assembly 22, an electrode terminal 23, a current collection member 27, a sealing member 26, a first insulated member 24, and a second insulated member 25. The housing 21 has a wall portion 211, the wall portion 211 is provided with a mounting hole 2111, and the mounting hole 2111 extends through the wall portion 211 in the thickness direction X of the wall portion. The housing 21 includes a case 212 and an end cover 213, an accommodating cavity having an opening 2121 is formed inside the case 212, the end cover 213 closes the opening 2121, and the end cover 213 is the wall portion 211. In the thickness direction X of the wall portion, the wall portion 211 has a first surface 2112 facing away from the electrode assembly 22 and a second surface 2113 facing the electrode assembly 22. The electrode assembly 22 is accommodated in the housing 21, and the electrode assembly 22 has a tab 221. The electrode terminal 23 is riveted on the wall portion 211, and the electrode terminal 23 is electrically connected to the electrode assembly 22. The electrode terminal 23 includes a flanged portion 231, a body portion 234, and a limiting portion 235. The body portion 234 is threaded through the mounting hole 2111 in the thickness direction X of the wall portion. The flanged portion 231 is connected to an end of the body portion 234 close to the electrode assembly 22. The flanged portion 231 is located on a side of the wall portion 211 that faces the electrode assembly 22. In the thickness direction X of the wall portion, the flanged portion 231 is provided with a third surface 2311 facing the electrode assembly 22, the riveting groove 233 is formed at the end of the electrode terminal 23 that faces the electrode assembly 22, the riveting groove 233 is sunk from the third surface 2311 to a direction away from the electrode assembly 22, and the groove bottom surface of the riveting groove 233 is closer to the electrode assembly 22 than the second surface 2113. The limiting portion 235 is connected to an end of the body portion 234 facing away from the electrode assembly 22, where in the thickness direction X of the wall portion, the continuous connection surface 232 is formed at an end of the limiting portion 235 facing away from the electrode assembly 22, the connection surface 232 is a plane, the connection surface 232 is configured to connect to the busbar component 30, the limiting portion 235 is located on a side of the wall portion 211 facing away from the electrode assembly 22, and the limiting portion 235 and the flanged portion 231 are configured to collaboratively hold the wall portion 211, to rivet the electrode terminal 23 to the wall portion 211. In the thickness direction X of the wall portion, the connection surface 232 is farther from the electrode assembly 22 than the first surface 2112. The sealing member 26 is disposed between the wall portion 211 and the electrode terminal 23, at least a part of the sealing member 26 is located in the mounting hole 2111, to seal a gap between the electrode terminal 23 and a hole wall surface of the mounting hole 2111, and the sealing member 26 butts against a side of the flanged portion 231 that faces away from the electrode assembly 22 in the thickness direction X of the wall portion. The current collection member 27 is disposed between the wall portion 211 and the electrode assembly 22, where the current collection member 27 connects the electrode assembly 22 and the electrode terminal 23, to electrically connect the electrode assembly 22 and the electrode terminal 23. The current collection member 27 includes a base portion 271 and a first convex portion 272. The base portion 271 is disposed between the electrode assembly 22 and the wall portion 211 in the thickness direction X of the wall portion, and the base portion 271 butts against the third surface 2311 of the flanged portion 231. The base portion 271 is connected to the tab 221 of the electrode assembly 22. The first convex portion 272 is convexly disposed on a side of the base portion 271 facing away from the electrode assembly 22. The first convex portion 272 is inserted into the riveting groove 233 and is welded to a groove bottom surface of the riveting groove 233. in the thickness direction X of the wall portion, a first groove 273 is formed on a side of the current collection member 27 facing the electrode assembly 22 and at a position corresponding to the first convex portion 272. In the thickness direction X of the wall portion, at least a part of the first insulated member 24 is located between the flanged portion 231 and the wall portion 211, to insulate and isolate the flanged portion 231 from the wall portion 211, and at least a part of the second insulated member 25 is located between the limiting portion 235 and the wall portion 211, to insulate and isolate the limiting portion 235 from the wall portion 211. A side of the wall portion 211 that faces away from the electrode assembly 22 is provided with an accommodating groove 2114, the mounting hole 2111 is disposed on a groove bottom surface of the accommodating groove 2114, and at least a part of the second insulated member 25 is accommodated in the accommodating groove 2114. The electrode terminal 23 includes a first material layer 236 and a second material layer 237 that are composited with each other, the first material layer 236 and the second material layer 237 are stacked in the thickness direction X of the wall portion, the first material layer 236 is located on a side of the second material layer 237 facing the electrode assembly 22, and the connection surface 232 is formed on a side of the second material layer 237 facing away from the first material layer 236. A material of the first material layer 236 is different from a material of the second material layer 237, the first material layer 236 is used for connecting to a tab 221 of the electrode assembly 22, the material of the first material layer 236 is the same as a material of the tab 221 of the electrode assembly 22, the second material layer 237 is used for connecting to the busbar component 30, and the material of the second material layer 237 is the same as a material of the busbar component 30.

It should be noted that the examples of the present application and features in the examples may be combined with each other without conflicts.

The foregoing descriptions are merely exemplary examples of the present application and are not intended to limit the present application. For a person skilled in the art, the present application may have various modifications and changes. Any modification, equivalent replacement, and improvement made within the spirit and principle of the present application are included in the protection scope of the present application.

## Claims

1. A battery cell, comprising:
a housing, provided with a wall portion;
an electrode assembly, accommodated in the housing; and
an electrode terminal, riveted on the wall portion, wherein the electrode terminal is electrically connected to the electrode assembly; and
the electrode terminal comprises a flanged portion; in a thickness direction of the wall portion, the flanged portion is formed at an end of the electrode terminal close to the electrode assembly and located on a side of the wall portion facing the electrode assembly, to rivet the electrode terminal onto the wall portion; a continuous connection surface is formed at an end of the electrode terminal facing away from the electrode assembly, and the connection surface is used for connecting to a busbar component.

2. The battery cell according to claim 1, wherein the connection surface is a plane.

3. The battery cell according to claim 1 or 2, wherein in the thickness direction of the wall portion, the wall portion is provided with a first surface facing away from the electrode assembly, and the connection surface is farther from the electrode assembly than the first surface.

4. The battery cell according to any one of claims 1 to 3, wherein in the thickness direction of the wall portion, a riveting groove is formed at an end of the electrode terminal that faces the electrode assembly, the flanged portion is disposed around the riveting groove, and a projection of the riveting groove is located in the connection surface.

5. The battery cell according to claim 4, wherein in the thickness direction of the wall portion, the wall portion is provided with a first surface facing away from the electrode assembly, and a groove bottom surface of the riveting groove is closer to the electrode assembly than the first surface.

6. The battery cell according to claim 5, wherein in the thickness direction of the wall portion, the wall portion is provided with a second surface facing the electrode assembly, and the groove bottom surface of the riveting groove is closer to the electrode assembly than the second surface.

7. The battery cell according to any one of claims 4 to 6, wherein the battery cell further comprises:
a current collection member, disposed between the wall portion and the electrode assembly, wherein the current collection member connects the electrode assembly and the electrode terminal, to electrically connect the electrode assembly and the electrode terminal.

8. The battery cell according to claim 7, wherein at least a part of the current collection member is accommodated in the riveting groove and is connected to the groove bottom surface of the riveting groove.

9. The battery cell according to claim 8, wherein the wall portion is provided with a mounting hole, and the mounting hole extends through the wall portion in the thickness direction of the wall portion;
the battery cell further comprises a sealing member, the sealing member is disposed between the wall portion and the electrode terminal, at least a part of the sealing member is located in the mounting hole, to seal a gap between the electrode terminal and a hole wall surface of the mounting hole, and the sealing member butts against a side of the flanged portion that faces away from the electrode assembly in the thickness direction of the wall portion; and
the current collection member is welded to the groove bottom surface of the riveting groove.

10. The battery cell according to claim 8 or 9, wherein the current collection member comprises:
a base portion, disposed between the electrode assembly and the wall portion in the thickness direction of the wall portion, wherein the base portion is connected to the electrode assembly; and
a first convex portion, disposed on a side of the base portion facing away from the electrode assembly, wherein the first convex portion is inserted into the riveting groove and connected to the groove bottom surface of the riveting groove.

11. The battery cell according to claim 10, wherein in the thickness direction of the wall portion, the flanged portion is provided with a third surface facing the electrode assembly, the riveting groove is sunk from the third surface to a direction away from the electrode assembly, and the third surface butts against the base portion.

12. The battery cell according to claim 10 or 11, wherein in the thickness direction of the wall portion, a first groove is formed on a side of the current collection member facing the electrode assembly and at a position corresponding to the first convex portion.

13. The battery cell according to claim 7, wherein the groove bottom surface of the riveting groove is convexly provided with a connection portion, and the connection portion is connected to the current collection member.

14. The battery cell according to claim 13, wherein the wall portion is provided with a mounting hole, and the mounting hole extends through the wall portion in the thickness direction of the wall portion;
the battery cell further comprises a sealing member, the sealing member is disposed between the wall portion and the electrode terminal, at least a part of the sealing member is located in the mounting hole, to seal a gap between the electrode terminal and a hole wall surface of the mounting hole, and the sealing member butts against a side of the flanged portion that faces away from the electrode assembly in the thickness direction of the wall portion; and
the current collection member is welded to the connection portion.

15. The battery cell according to claim 13 or 14, wherein in the thickness direction of the wall portion, the flanged portion is provided with a third surface facing the electrode assembly, the riveting groove is sunk from the third surface to a direction away from the electrode assembly, and an end surface at an end of the connection portion facing the electrode assembly is flush with the third surface.

16. The battery cell according to claim 13 or 14, wherein in the thickness direction of the wall portion, the flanged portion is provided with a third surface facing the electrode assembly, the riveting groove is sunk from the third surface to a direction away from the electrode assembly, and the connection portion projects out of the third surface.

17. The battery cell according to claim 16, wherein in the thickness direction of the wall portion, a side of the current collection member facing away from the electrode assembly is provided with a second groove; and
the connection portion is inserted into the second groove and connected to a groove bottom surface of the second groove.

18. The battery cell according to claim 17, wherein in the thickness direction of the wall portion, a second convex portion is formed on a side of the current collection member facing the electrode assembly and at a position corresponding to the second groove.

19. The battery cell according to any one of claims 13 to 18, wherein in the thickness direction of the wall portion, the flanged portion is provided with a third surface facing the electrode assembly, the riveting groove is sunk from the third surface to a direction away from the electrode assembly, and the third surface butts against the current collection member.

20. The battery cell according to any one of claims 1 to 19, wherein the wall portion is provided with a mounting hole, and the mounting hole extends through the wall portion in the thickness direction of the wall portion;
the electrode terminal further comprises:
a body portion, threaded through the mounting hole in the thickness direction of the wall portion, wherein the flanged portion is connected to an end of the body portion close to the electrode assembly; and
a limiting portion, connected to an end of the body portion facing away from the electrode assembly, wherein in the thickness direction of the wall portion, the connection surface is formed at an end of the limiting portion facing away from the electrode assembly, the limiting portion is located on a side of the wall portion facing away from the electrode assembly, and the limiting portion and the flanged portion are configured to collaboratively hold the wall portion.

21. The battery cell according to claim 20, wherein the battery cell further comprises:
a first insulated member, wherein in the thickness direction of the wall portion, at least a part of the first insulated member is located between the flanged portion and the wall portion, to insulate and isolate the flanged portion from the wall portion.

22. The battery cell according to claim 20 or 21, wherein the battery cell further comprises:
a second insulated member, wherein in the thickness direction of the wall portion, at least a part of the second insulated member is located between the limiting portion and the wall portion, to insulate and isolate the limiting portion from the wall portion.

23. The battery cell according to claim 22, wherein in the thickness direction of the wall portion, a side of the wall portion that faces away from the electrode assembly is provided with an accommodating groove, the mounting hole is disposed on a groove bottom surface of the accommodating groove, and at least a part of the second insulated member is accommodated in the accommodating groove.

24. The battery cell according to any one of claims 1 to 23, wherein the electrode terminal comprises a first material layer and a second material layer that are composited with each other, the first material layer and the second material layer are stacked in the thickness direction of the wall portion, the first material layer is located on a side of the second material layer facing the electrode assembly, and the connection surface is formed on a side of the second material layer facing away from the first material layer; and
a material of the first material layer is different from a material of the second material layer, the first material layer is used for connecting to a tab of the electrode assembly, the material of the first material layer is the same as a material of the tab of the electrode assembly, the second material layer is used for connecting to the busbar component, and the material of the second material layer is the same as a material of the busbar component.

25. The battery cell according to any one of claims 1 to 24, wherein the housing comprises:
a case, inside which an accommodating cavity with an opening is formed, wherein the accommodating cavity is configured to accommodate the electrode assembly; and
an end cover, for closing the opening, wherein
the end cover is the wall portion.

26. The battery cell according to any one of claims 1 to 24, wherein the housing comprises:
a case, comprising a side wall and the wall portion that are integrally formed, wherein the side wall is disposed around the wall portion, the side wall has one end connected to the wall portion and the other end encircling an opening in the thickness direction of the wall portion, and the side wall and the wall portion jointly define an accommodating cavity for accommodating the electrode assembly; and
an end cover, for closing the opening.

27. A battery, comprising the battery cell according to any one of claims 1 to 26.

28. A power consuming apparatus, comprising a battery cell according to any one of claims 1 to 26, wherein the battery cell is configured to supply electric energy.
